(19) Europäisches Patentamt
European Patent Office
Office européen des brevets

(11) **EP 2 799 472 A1**

(12) **EUROPEAN PATENT APPLICATION**
published in accordance with Art. 153(4) EPC

(43) Date of publication:
**05.11.2014 Bulletin 2014/45**

(21) Application number: **12861289.2**

(22) Date of filing: **27.12.2012**

(51) Int Cl.:
*C08J 9/12* (2006.01)      *B29C 47/20* (2006.01)
*C08L 23/08* (2006.01)      *C08L 23/10* (2006.01)
*C09J 7/02* (2006.01)

(86) International application number:
**PCT/JP2012/083795**

(87) International publication number:
**WO 2013/100015 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011   JP 2011289417**
**28.12.2011   JP 2011289420**

(71) Applicant: **Sekisui Plastics Co., Ltd.**
**Osaka-shi**
**Osaka 530-8565 (JP)**

(72) Inventors:
• **KIMURA, Kazuma**
**Tenri-city**
**Nara 632-8505 (JP)**
• **TANAKA, Nobukiyo**
**Tenri-city**
**Nara 632-8505 (JP)**

(74) Representative: **Müller-Boré & Partner**
**Patentanwälte PartG mbB**
**Friedenheimer Brücke 21**
**80639 München (DE)**

(54) **EXPANDED POLYOLEFIN RESIN SHEET, METHOD FOR PRODUCING SAME, AND USE OF SAME**

(57)    It is an object of the present invention to provide a foamed polyolefin-based resin sheet having improved tensile properties (tensile strength and elongation) and adhesiveness to pressure sensitive adhesives while maintaining its sufficient flexibility that is approximately at the same level as the flexibility of conventional foamed polyolefin-based resin sheets. The object is achieved by a foamed polyolefin-based resin sheet which has an apparent density of 30 kg/m$^3$ to 100 kg/m$^3$, a thickness of 0.1 mm to 3.0 mm, an average cell diameter of 0.02 mm to 0.2 mm, and a compressive strength of 20 kPa to 100 kPa upon 50% compression, and a tensile strength of 800 kPa to 2,000 kPa.

EP 2 799 472 A1

**Description**

Technical Field

The present invention relates in general to foamed polyolefin-based resin sheets, methods of manufacturing the sheets, and their use. The present invention relates in particular to: foamed polyolefin-based resin sheets having improved tensile properties (tensile strength and elongation) and adhesiveness to pressure sensitive adhesives, with their sufficient flexibility being maintained approximately at the same level as the flexibility of conventional foamed polyolefin-based resin sheets; methods of manufacturing the sheets; and pressure sensitive adhesive tape base materials, sealant base materials, and pressure sensitive adhesive tapes containing the foamed polyolefin-based resin sheets.

Background Art

Resin foams containing a polystyrene-based resin or a polyolefin-based resin (e.g., polypropylene) as a resin component are currently used broadly as packaging cushioning and automobile structural members, to name a few applications, for their excellent cushioning performance (impact resistance), moldability, and other properties.

Apart from these applications, sheets of polyolefin-based resin foam (foamed polyolefin-based resin sheets) have come to be used as a base material for pressure sensitive adhesive tapes and sealants in electronics or electric appliances/machines to exploit its fabricability, flexibility, and cushioning performance. In these applications, the foamed polyolefin-based resin sheet is required to have high flexibility to ensure followability and sealability to the surface of an object. Furthermore, to use a foamed polyolefin-based resin sheet as a base material for pressure sensitive adhesive tapes or sealants, typically, a layer of a pressure sensitive adhesive is stacked on the surface of the foamed polyolefin-based resin sheet. Therefore, for these applications, the foamed polyolefin-based resin sheet is further required to have excellent tensile properties, tear strength, and adhesiveness to pressure sensitive adhesives, as well as high flexibility. Specifically, if the foamed polyolefin-based resin sheet does not have sufficient tensile strength, the foamed polyolefin-based resin sheet may be destructed by the adhesive force of the pressure sensitive adhesive when the foamed polyolefin-based resin sheet is peeled from an object, for example, a carrier tape during recycling or assembly of an electricity product. Meanwhile, if the pressure sensitive adhesive and the foamed polyolefin-based resin sheet do not have sufficient adhesiveness, the foamed polyolefin-based resin sheet may peel off the pressure sensitive adhesive upon peeling the pressure sensitive adhesive tape or the sealant from the object, leaving the pressure sensitive adhesive behind on the object.

In view of these problems, Patent Document 1 discloses, as a resin foam having excellent flexibility and resistance to destruction of foams upon being peeled from a carrier tape, a resin foam containing a polyolefin-based resin having a surface subjected to a thermal melting process until the surface comes to have a gloss of 1.5 or more as measured at a 60° angle.

Citation List

Patent Literature

Patent Document 1

Japanese Patent Application Publication, Tokukai, No. 2011-231171

Summary of the Invention

Problems to Be Solved by the Invention

Patent Document 1 improves the adhesiveness to pressure sensitive adhesives of a resin foam having excellent flexibility, by carrying out a thermal melting process on the surface of the resin foam until the surface comes to have a gloss of 1.5 or more as measured at a 60° angle, the resin foam containing a polypropylene resin and a polyolefin-based elastomer as main resin components.

The resin foam described in Patent Document 1 exhibits fair flexibility and adhesiveness to pressure sensitive adhesives. However, the resin foam could be poorly extendable because the surface hardens in the thermal melting process. In addition, the thermal melting process is essential in fabricating the resin foam of Patent Document 1, which negatively affects its productivity. The resin foam is still insufficient in tensile strength and adhesiveness to pressure sensitive adhesives. The resin foam is also insufficient in elongation, tensile strength, and adhesiveness to pressure sensitive adhesives if its surface is not subjected to a thermal melting process.

The present invention, conceived in view of these problems, has an object of providing: a foamed polyolefin-based resin sheet having improved tensile properties (tensile strength and elongation) and adhesiveness to pressure sensitive adhesives while maintaining its sufficient flexibility that is approximately at the same level as the flexibility of conventional foamed polyolefin-based resin sheets; a method of manufacturing the sheet; and a pressure sensitive adhesive tape base material, sealant base material, and pressure sensitive adhesive tape containing the foamed polyolefin-based resin sheet.

Solution to Problem

The inventors of the present invention have diligently worked in order to accomplish the object and as a result, found that a foamed polyolefin-based resin sheet which has a particular apparent density, thickness, average cell diameter, compressive strength upon 50% compression, and tensile strength exhibits improved tensile properties and adhesiveness to pressure sensitive adhesives, with its sufficient flexibility being maintained approximately at the same level as the flexibility of conventional foamed polyolefin-based resin sheets, which has led to the completion of the invention.

The present invention hence provides a foamed polyolefin-based resin sheet which has an apparent density of 30 kg/m$^3$ to 100 kg/m$^3$, a thickness of 0.1 mm to 3.0 mm, an average cell diameter of 0.02 mm to 0.2 mm, a compressive strength (compressive stress) of 20 kPa to 100 kPa upon 50% compression, and a tensile strength (tensile maximum stress) of 800 kPa to 2,000 kPa.

The present invention also provides a pressure sensitive adhesive tape base material which contains this foamed polyolefin-based resin sheet in accordance with the present invention.

The present invention also provides a sealant base material which contains this foamed polyolefin-based resin sheet in accordance with the present invention.

The present invention also provides a pressure sensitive adhesive tape which contains: either the pressure sensitive adhesive tape base material or the sealant base material; and a pressure sensitive adhesive provided on at least one of surfaces of the pressure sensitive adhesive tape base material or the sealant base material.

The inventors of the present invention have also diligently worked in order to accomplish the object and as a result, found that a foamed polyolefin-based resin sheet having improved tensile properties, tear strength, and adhesiveness to pressure sensitive adhesives can be manufactured, with its sufficient flexibility being maintained approximately at the same level as the flexibility of conventional foamed polyolefin-based resin sheets, by extrusion-foaming a polyolefin-based resin composition using a supercritical carbon dioxide gas and a die set attached to a downstream end of an extruder, the polyolefin-based resin composition containing either a polypropylene-based resin having a particular melt flow rate and a polyethylene-based plastomer having a particular melt flow rate or a polypropylene-based resin having a particular melt flow rate and a mixture of a polyethylene-based plastomer having a particular melt flow rate and a thermoplastic elastomer in a particular proportion, which has led to the completion of the invention.

The present invention hence provides a method of manufacturing a foamed polyolefin-based resin sheet which includes: melt-kneading a polyolefin-based resin composition with a supercritical carbon dioxide gas as a blowing agent in an extruder to prepare a kneaded product, the polyolefin-based resin composition containing a polypropylene-based resin having a melt flow rate of 0.2 grams/10 min. to 5 grams/10 min. in 20 mass% to 80 mass% and a polyethylene-based plastomer having a melt flow rate of 0.2 grams/10 min. to 15 grams/10 min. in 20 mass% to 80 mass%; and extrusion-foaming the kneaded product out of a die set attached to a downstream end of the extruder to obtain a foamed polyolefin-based resin sheet.

Advantageous Effects of the Invention

The foamed polyolefin-based resin sheet in accordance with the present invention has its apparent density, thickness, average cell diameter, compressive strength upon 50% compression, and tensile strength all adjusted to particular values. Therefore, the invention provides a foamed polyolefin-based resin sheet that exhibits improved tensile properties and adhesiveness to pressure sensitive adhesives while maintaining its sufficient flexibility that is approximately at the same level as the flexibility of conventional foamed polyolefin-based resin sheets. Specifically, the foamed polyolefin-based resin sheet in accordance with the present invention may be suitably used as the aforementioned pressure sensitive adhesive tape base material and sealant base material because the foamed polyolefin-based resin sheet has sufficient flexibility and excellent tensile properties and adhesiveness to pressure sensitive adhesives. In addition, the foamed polyolefin-based resin sheet in accordance with the present invention may be suitably used in pressure sensitive adhesive tape and sealant applications in which these base materials are used.

The present invention provides a pressure sensitive adhesive tape base material having improved tensile properties and adhesiveness to pressure sensitive adhesives while maintaining its sufficient flexibility that is approximately at the same level as the flexibility of conventional pressure sensitive adhesive tape base materials.

The present invention provides a pressure sensitive adhesive tape having improved tensile properties and adhesiveness of a pressure sensitive adhesive tape base material or sealant base material to pressure sensitive adhesives while maintaining its sufficient flexibility that is approximately at the same level as the flexibility of conventional pressure sensitive adhesive tapes.

The present invention provides a sealant base material having improved tensile properties and adhesiveness to pressure sensitive adhesives while maintaining its sufficient flexibility that is approximately at the same level as the flexibility of conventional sealant base materials.

The present invention provides a method of manufacturing a foamed polyolefin-based resin sheet having improved tensile properties, tear strength, and adhesiveness to pressure sensitive adhesives while maintaining its sufficient flexibility that is approximately at the same level as the flexibility of conventional foamed polyolefin-based resin sheets. Specifically, the foamed polyolefin-based resin sheet obtained by the manufacturing method in accordance with the present invention may be suitably used as the aforementioned pressure sensitive adhesive tape base material and sealant base material because the foamed polyolefin-based resin sheet has sufficient flexibility and excellent tensile properties, tear strength, and adhesiveness to pressure sensitive adhesives. The foamed polyolefin-based resin sheet obtained by the manufacturing method in accordance with the present invention may be suitably used in pressure sensitive adhesive tape and sealant applications in which these base materials are used.

Brief Description of Drawings

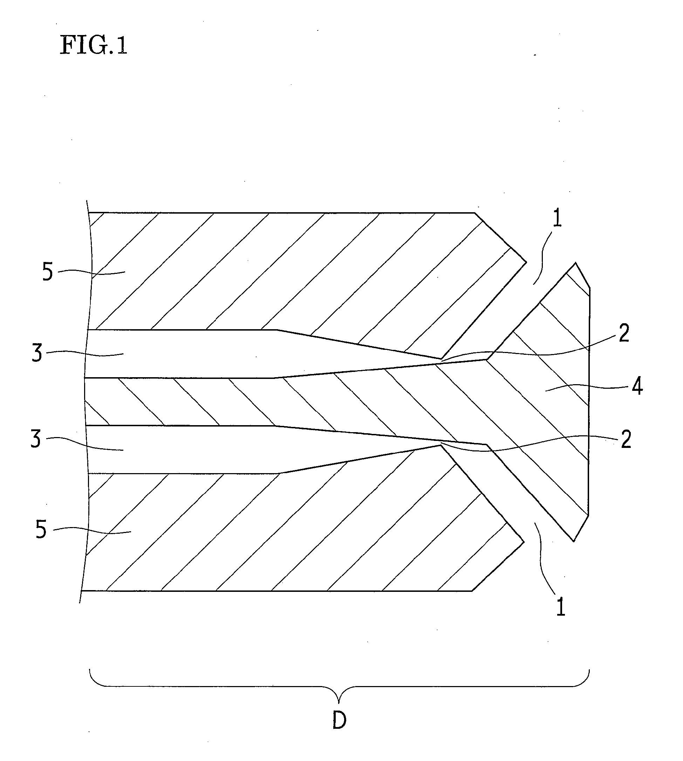

Figure 1 is a schematic cross-sectional view of a circular die set.

Description of Embodiments

The foamed polyolefin-based resin sheet in accordance with the present invention is characterized in that it has an apparent density of 30 kg/m$^3$ to 100 kg/m$^3$, a thickness of 0.1 mm to 3.0 mm, an average cell diameter of 0.02 mm to 0.2 mm, a compressive strength of 20 kPa to 100 kPa upon 50% compression, and a tensile strength of 800 kPa to 2,000 kPa.

The foamed polyolefin-based resin sheet in accordance with the present invention, being characterized as above, exhibits improved tensile properties and adhesiveness to pressure sensitive adhesives, with its sufficient flexibility being maintained approximately at the same level as the flexibility of conventional foamed polyolefin-based resin sheets. In addition, given that a resin with greater flexibility generally more readily moves into tiny recesses on the surface of an object and exhibits greater followability to the surface (greater adhesiveness to the contact surface), the foamed polyolefin-based resin sheet in accordance with the present invention has approximately the same level of sufficient followability to the surface of an object as conventional foamed polyolefin-based resin sheets, because the foamed polyolefin-based resin sheet has sufficient flexibility that is approximately at the same level as the flexibility of conventional foamed polyolefin-based resin sheets. For these reasons, the foamed polyolefin-based resin sheet in accordance with the present invention is useful especially as the pressure sensitive adhesive tape base material and the sealant base material.

In other words, since the foamed polyolefin-based resin sheet in accordance with the present invention has an apparent density of 30 kg/m$^3$ to 100 kg/m$^3$, the foamed polyolefin-based resin sheet has greater tensile strength than conventional foamed polyolefin-based resin sheets and sufficient flexibility that is approximately at the same level as the flexibility of conventional foamed polyolefin-based resin sheets and also exhibits excellent cushioning performance and fabricability.

Since the foamed polyolefin-based resin sheet in accordance with the present invention has a thickness of 0.1 mm to 3.0 mm, the foamed polyolefin-based resin sheet has greater tensile strength than conventional foamed polyolefin-based resin sheets and sufficient flexibility that is approximately at the same level as the flexibility of conventional foamed polyolefin-based resin sheets and also exhibits excellent cushioning performance.

Since the foamed polyolefin-based resin sheet in accordance with the present invention has an average cell diameter of 0.02 mm to 0.2 mm, the foamed polyolefin-based resin sheet has greater tensile strength than conventional foamed polyolefin-based resin sheets and sufficient flexibility and followability to the surface of an object that are approximately at the same level as the flexibility and followability of conventional foamed polyolefin-based resin sheets and also exhibits excellent surface smoothness and fabricability.

Since the foamed polyolefin-based resin sheet in accordance with the present invention has a compressive strength of 20 kPa to 100 kPa upon 50% compression, the foamed polyolefin-based resin sheet has sufficient flexibility and followability to the surface of an object that are approximately at the same level as the flexibility and followability of conventional foamed polyolefin-based resin sheets and also exhibits excellent cushioning performance and sealability.

In the context of the present invention, "compressive strength" refers to the stress experienced by a foamed polyolefin-based resin sheet when it is compressed to a predetermined compression rate (%) under a load that compresses the foamed polyolefin-based resin sheet. The "compression" (compression rate), expressed in percentage, refers to the percentage by which the foamed polyolefin-based resin sheet is compressed as based on its uncompressed thickness.

Since the foamed polyolefin-based resin sheet in accordance with the present invention has a tensile strength of 800 kPa to 2,000 kPa, the foamed polyolefin-based resin sheet does not easily tear under tensile, exhibiting improved tensile properties over conventional foamed polyolefin-based resin sheets, and still possesses sufficient flexibility that is approximately at the same level as the flexibility of conventional foamed polyolefin-based resin sheets.

In the context of the present invention, "tensile strength" refers to the highest tensile stress of all directions. If the foamed polyolefin-based resin sheet is manufactured by extrusion-foaming, the tensile strength of the foamed polyolefin-based resin sheet is in many cases the stress in the extrusion direction.

The following description will give more specific details of the foamed polyolefin-based resin sheet in accordance with the present invention.

Foamed Polyolefin-based Resin Sheet

The foamed polyolefin-based resin sheet in accordance with the present invention has an apparent density of $30 \text{ kg/m}^3$ to $100 \text{ kg/m}^3$, preferably $30 \text{ kg/m}^3$ to $90 \text{ kg/m}^3$, and more preferably $35 \text{ kg/m}^3$ to $75 \text{ kg/m}^3$. Having an apparent density within one of these ranges, the foamed polyolefin-based resin sheet has greater tensile strength than conventional foamed polyolefin-based resin sheets and sufficient flexibility that is approximately at the same level as the flexibility of conventional foamed polyolefin-based resin sheets and also exhibits excellent cushioning performance and fabricability. If the foamed polyolefin-based resin sheet has an apparent density of less than $30 \text{ kg/m}^3$, the foamed polyolefin-based resin sheet has an insufficient tensile strength. If the foamed polyolefin-based resin sheet has an apparent density in excess of $100 \text{ kg/m}^3$, the foamed polyolefin-based resin sheet has insufficient flexibility, cushioning performance and fabricability.

The foamed polyolefin-based resin sheet in accordance with the present invention has a thickness of 0.1 mm to 3.0 mm, preferably 0.1 mm to 2.0 mm, and more preferably 0.2 mm to 1.5 mm. Having a thickness within one of these ranges, the foamed polyolefin-based resin sheet has greater tensile strength than conventional foamed polyolefin-based resin sheets and sufficient flexibility that is approximately at the same level as the flexibility of conventional foamed polyolefin-based resin sheets and also exhibits followability to the surface of an object and excellent cushioning performance. If the foamed polyolefin-based resin sheet has a thickness of less than 0.1 mm, the foamed polyolefin-based resin sheet has insufficient tensile strength and cushioning performance. If the foamed polyolefin-based resin sheet has a thickness in excess of 3.0 mm, the foamed polyolefin-based resin sheet has excessively high compressive strength, which reduces followability so that dust and water cannot be prevented from entering fine gaps and step corners.

The foamed polyolefin-based resin sheet in accordance with the present invention has an average cell diameter of 0.02 mm to 0.2 mm, preferably 0.04 mm to 0.18 mm, and more preferably 0.08 mm to 0.17 mm. Having an average cell diameter within one of these ranges, the foamed polyolefin-based resin sheet has greater tensile strength than conventional foamed polyolefin-based resin sheets and sufficient flexibility that is approximately at the same level as the flexibility of conventional foamed polyolefin-based resin sheets and also exhibits followability to the surface of an object and excellent fabricability. If the foamed polyolefin-based resin sheet has an average cell diameter of less than 0.02 mm, the foamed polyolefin-based resin sheet has insufficient tensile strength. If the foamed polyolefin-based resin sheet has an average cell diameter in excess of 0.2 mm, the foamed polyolefin-based resin sheet has insufficient flexibility, followability to the surface of an object, and fabricability.

The foamed polyolefin-based resin sheet in accordance with the present invention has a compressive strength of 20 kPa to 100 kPa, preferably 35 kPa to 90 kPa, and more preferably 40 kPa to 90 kPa, upon 50% compression. Having a compressive strength upon 50% compression within one of these ranges, the foamed polyolefin-based resin sheet has followability to the surface of an object and sufficient flexibility that is approximately at the same level as the flexibility of conventional foamed polyolefin-based resin sheets, allows for easy handling, and also exhibits excellent cushioning performance and sealability. If the foamed polyolefin-based resin sheet has a compressive strength of less than 20 kPa upon 50% compression, the foamed polyolefin-based resin sheet has insufficient mechanical strength, which hampers easy handling. If the foamed polyolefin-based resin sheet has a compressive strength in excess of 100 kPa upon 50% compression, the foamed polyolefin-based resin sheet has insufficient cushioning performance, flexibility, followability, and sealability.

The foamed polyolefin-based resin sheet in accordance with the present invention has a tensile strength of 800 kPa to 2,000 kPa, preferably 800 kPa to 1,800 kPa, and more preferably 1,000 kPa to 1,800 kPa. If the foamed polyolefin-based resin sheet has a tensile strength of less than 800 kPa, the foamed polyolefin-based resin sheet has insufficient tensile strength. A foamed polyolefin-based resin sheet with very high tensile strength tends to be rigid and not flexible. Therefore, if the foamed polyolefin-based resin sheet has a tensile strength in excess of 2,000 kPa, the foamed polyolefin-based resin sheet is likely to have insufficient flexibility. Having a tensile strength within one of the ranges, the foamed polyolefin-based resin sheet exhibits improved tensile properties over conventional foamed polyolefin-based resin sheets and sufficient flexibility that is approximately at the same level as the flexibility of conventional foamed polyolefin-based resin sheets. Therefore, the foamed polyolefin-based resin sheet with a tensile strength within one of the ranges exhibits sufficient flexibility when used as a pressure sensitive adhesive tape base material or a sealant base material and does not easily tear.

The foamed polyolefin-based resin sheet in accordance with the present invention has a tear strength of preferably 20 N/cm to 120 N/cm, more preferably 40 N/cm to 120 N/cm, and even more preferably 60 N/cm to 120 N/cm. Having a tear strength within one of these ranges, the foamed polyolefin-based resin sheet has excellent tear strength, flexibility, and fabricability. If the foamed polyolefin-based resin sheet has a tear strength of less than 20 N/cm, the foamed polyolefin-based resin sheet has insufficient tear strength so that the sheet tears up in an adhesion process or a slicing process where the skin is removed, which renders it difficult to roll up the sheet. If the foamed polyolefin-based resin sheet has a tear strength in excess of 120 N/cm, the foamed polyolefin-based resin sheet has insufficient flexibility.

The foamed polyolefin-based resin sheet in accordance with the present invention has a yield point elongation (tensile maximum elongation) of preferably 90% to 200% and more preferably 100% to 180%. Having a yield-point extension within one of these ranges, the foamed polyolefin-based resin sheet has excellent flexibility and fabricability and sufficient mechanical strength. If the foamed polyolefin-based resin sheet has a yield-point elongation of less than 90%, the foamed polyolefin-based resin sheet may exhibit an insufficient elongation, which could result in insufficient flexibility and fabricability. If the foamed polyolefin-based resin sheet has a yield-point elongation in excess of 200%, the foamed polyolefin-based resin sheet is likely to have insufficient mechanical strength.

The foamed polyolefin-based resin sheet in accordance with the present invention preferably has a semi-closed and semi-open cell structure or an open cell structure. A foamed polyolefin-based resin sheet, with a semi-closed and semi-open cell structure or an open cell structure, has a lower compressive strength and hence more flexible. A foamed polyolefin-based resin sheet, with a semi-open cell structure or an open cell structure, has better followability, tensile strength, and adhesiveness to pressure sensitive adhesives. A foamed polyolefin-based resin sheet, with a semi-closed and semi-open cell structure or an open cell structure, expands less in response to the thermal expansion of its internal gas at high temperatures because most of the expanded internal gas flows out of the foamed polyolefin-based resin sheet, barely remaining inside the foamed polyolefin-based resin sheet.

In the context of the present invention, a "semi-closed and semi-open cell structure" refers to a structure with an open-cell ratio greater than or equal to 30% and less than 60%. An "open cell structure" refers to a structure with an open-cell ratio greater than or equal to 60%. In other words, the foamed polyolefin-based resin sheet in accordance with the present invention preferably has an open-cell ratio greater than or equal to 30%. If the open-cell ratio is less than 30%, the foamed polyolefin-based resin sheet may have insufficient flexibility so that the sheet could not exhibit sufficient followability. The foamed polyolefin-based resin sheet especially preferably has an open-cell ratio greater than or equal to 70% to reduce the expansion of the sheet and impart excellent followability to the sheet. A foamed polyolefin-based resin sheet, with a very high open-cell ratio, exhibits poor mechanical strength. Therefore, the foamed polyolefin-based resin sheet in accordance with the present invention has an open-cell ratio of preferably 60% to 95%, more preferably 70% to 95%, and more preferably 75% to 95%.

Measurement of these parameters will be described in detail in "Examples" below.

Polyolefin-based Resin

The polyolefin-based resin used in the present invention is, for example, a resin containing an alpha-olefin, such as ethylene, propylene, or 1-butene (alpha-butylene) as monomer units, preferably being a polypropylene-based resin (a propylene homopolymer or a propylene copolymer containing propylene as a main component), a polyethylene-based resin (an ethylene homopolymer or an ethylene copolymer containing ethylene as a main component), or a combination of these resins.

Polypropylene-based resins, polyethylene-based resins with a density higher than 0.92 g/cm$^3$, and combinations of these compounds are preferred examples of the polyolefin-based resin in the present invention because desired tensile strength is readily obtainable with these resins and their combinations. A polypropylene-based resin is most preferred among these.

Any one of these polyolefin-based resins may be used alone; alternatively, two or more of them may be used in any combination. When a copolymer is used as the polyolefin-based resin, the copolymer may be either a random copolymer or a block copolymer. Similarly, hydrogen atoms in the polyolefin-based resin may be replaced by substituents (non-hydrogen-atom groups).

Polypropylene-based Resin

Examples of the polypropylene-based resin include propylene homopolymers and propylene copolymers, such as ethylene/propylene copolymers containing a propylene monomer as a main component, propylene/acrylic acid copolymers containing a propylene monomer as a main component, propylene/alpha-olefin (alpha-olefin with four or more carbon atoms) copolymers containing a propylene monomer as a main component, propylene/vinyl acetate copolymers containing a propylene monomer as a main component, and propylene/methyl methacrylic acid copolymers containing a propylene monomer as a main component. A polypropylene copolymer "containing a propylene monomer as a main component" means that propylene-derived structural units account for at least 50 mass% of the polypropylene copolymer. When a propylene copolymer is used as the polypropylene-based resin, the propylene copolymer may be either a random copolymer or a block copolymer.

The alpha-olefin with four or more carbon atoms that constitutes the propylene/alpha-olefin copolymer may preferably be a $C_4$-$C_{12}$ alpha-olefin. Concrete examples of the $C_4$-$C_{12}$ alpha-olefin include 1-butene, isobutene, 1-pentene, 2-methyl-1-butene, 3-methyl-1-butene, 1-hexene, 2-methyl-1-pentene, 3-methyl-1-pentene, 4-methyl-1-pentene, 3,4-dimethyl-1-butene, 1-heptene, 3-methyl-1-hexene, 1-octene, 1-nonene, 1-decene, 1-undecene, and 1-dodecene.

Ethylene/propylene copolymers and propylene homopolymers are preferred examples of the polypropylene-based resin in the present invention because a foamed polyolefin-based resin sheet with desired physical properties is readily obtainable with these polymers. Propylene homopolymers are more preferred than ethylene/propylene copolymers.

Polyethylene-based Resin

The polyethylene-based resin is preferably a polyethylene-based resin with a density higher than 0.92 g/cm$^3$ and more preferably a polyethylene-based resin with a density higher than 0.94 g/cm$^3$.

Polyethylene-based Plastomer

In the present invention, the foamed polyolefin-based resin sheet preferably contains, in addition to the polyolefin-based resin, a polyethylene-based plastomer as a resin component. By containing a polyethylene-based plastomer, the foamed polyolefin-based resin sheet comes to exhibit suitable tensile strength while maintaining its flexibility and also to exhibit improved adhesiveness to pressure sensitive adhesives.

The polyethylene-based plastomer has a density of preferably 0.85 g/cm$^3$ to 0.91 g/cm$^3$, more preferably 0.86 g/cm$^3$ to 0.90 g/cm$^3$, and even more preferably 0.86 g/cm$^3$ to 0.89 g/cm$^3$. If the polyethylene-based plastomer has a density of 0.85 g/cm$^3$ to 0.91 g/cm$^3$, the foamed polyolefin-based resin sheet exhibits further improved flexibility and tensile strength. The density of the polyethylene-based plastomer can be measured according to JIS K7112.

If the polyethylene-based plastomer has a density higher than 0.91 g/cm$^3$, the foamed polyolefin-based resin sheet may have excessively high hardness, possibly failing to deliver desirable, good flexibility. On the other hand, if the polyethylene-based plastomer has a density lower than 0.85 g/cm$^3$, the foamed polyolefin-based resin sheet may have excessively low hardness, possibly failing to deliver desirable, excellent tensile strength.

The polyethylene-based plastomer is a copolymer of ethylene and an alpha-olefin or like non-ethylene copolymer component. The polyethylene-based plastomer in the present invention is preferably a copolymer of ethylene and a non-ethylene alpha-olefin because a foamed polyolefin-based resin sheet with desired sufficient flexibility and excellent mechanical strength (especially, tensile strength) is readily obtainable with such a plastomer. When the polyethylene-based plastomer is a copolymer of ethylene and a non-ethylene alpha-olefin, the resultant foamed polyolefin-based resin sheet exhibits further improved flexibility, tensile strength, and adhesiveness to pressure sensitive adhesives.

The alpha-olefin is preferably a $C_4$-$C_8$ alpha-olefin which in turn is preferably at least one compound selected from the group consisting of 1-butene, 1-hexene, and 1-octene. If the alpha-olefin is at least one compound selected from the group consisting of 1-butene, 1-hexene, and 1-octene, the resultant foamed polyolefin-based resin sheet exhibits further improved flexibility, tensile strength, and adhesiveness to pressure sensitive adhesives.

Examples of the polyethylene-based plastomer include "Esprene® NO416" (ethylene-1-butene copolymer) manufactured by Sumitomo Chemical Co., Ltd., "Kernel® KS240T" (ethylene-1-hexene copolymer) manufactured by Japan Polyethylene Corporation, "Kernel® KS571" (ethylene-1-hexene copolymer) manufactured by Japan Polyethylene Corporation, and "Affinity® EG8100" (ethylene-1-octene copolymer) manufactured by The Dow Chemical Company.

If a polyolefin-based resin and a polyethylene-based plastomer are used together as resin components, the foamed polyolefin-based resin sheet preferably contains a polyolefin-based resin in 20 mass% to 80 mass% and a polyethylene-based plastomer in 20 mass% to 80 mass% as resin components. If the foamed polyolefin-based resin sheet contains a polyolefin-based resin in 20 mass% to 80 mass% and a polyethylene-based plastomer in 20 mass% to 80 mass% as resin components, the foamed polyolefin-based resin sheet exhibits improved flexibility, adhesiveness to pressure sensitive adhesives, and tensile strength.

If the foamed polyolefin-based resin sheet contains a polyethylene-based plastomer in less than 20 mass% as a resin component, the foamed polyolefin-based resin sheet may have excessively high hardness, possibly failing to deliver desired flexibility. Under the same conditions, the foamed polyolefin-based resin sheet may not exhibit sufficiently improved adhesiveness to pressure sensitive adhesives. On the other hand, if the foamed polyolefin-based resin sheet contains a polyethylene-based plastomer in more than 80 mass% as a resin component, the foamed polyolefin-based resin sheet may have excessively low hardness, possibly failing to deliver desired tensile strength. The polyethylene-based plastomer content is more preferably greater than or equal to 25 mass% and less than or equal to 70 mass%. The polyethylene-based plastomer content is even more preferably greater than or equal to 30 mass% and less than 50 mass%.

The foamed polyolefin-based resin sheet in accordance with the present invention may contain, as a resin component, a thermoplastic elastomer in addition to a polyolefin-based resin and a polyethylene-based plastomer. By containing a thermoplastic elastomer, molding conditions upon extrusion can be relaxed without disrupting flexibility and other properties.

If the foamed polyolefin-based resin sheet in accordance with the present invention contains a polyolefin-based resin, a polyethylene-based plastomer, and a thermoplastic elastomer as resin components, the thermoplastic elastomer content is preferably from 5 mass% to 40 mass% as based on the sum of the resin components. If the thermoplastic elastomer content is less than 5 mass%, the use of the thermoplastic elastomer may not be effective. On the other hand, if the thermoplastic elastomer content is more than 40 mass%, the foamed polyolefin-based resin sheet may have excessively low hardness, possibly failing to deliver desired tensile strength. Under the same conditions, the foamed polyolefin-based resin sheet may not exhibit sufficiently improved adhesiveness to pressure sensitive adhesives. The thermoplastic elastomer content is more preferably from 10 mass% to 30 mass%.

Thermoplastic Elastomer

A thermoplastic elastomer is a polymer having a combined structure of hard and soft segments and exhibits rubber elasticity at normal temperature and at high temperatures, plasticity where it is plasticized, hence moldable, similarly to thermoplastic resins.

In a thermoplastic elastomer used in the invention, typically, the hard segment is a polyolefin-based resin component, such as a polypropylene component or a polyethylene component, whilst the soft segment is a rubber component, such as a polydiene component, an ethylene/propylene/diene copolymer component, or an ethylene/propylene copolymer component, or a amorphous polyethylene component.

Examples of the thermoplastic elastomer include polymerized thermoplastic elastomers directly prepared in a polymerization reaction vessel by polymerizing a monomer that will be hard segments and a monomer that will be soft segments in multiple stages; blended thermoplastic elastomers prepared by physically dispersing a polyolefin-based resin that will be hard segments and a rubber component that will be soft segments using a Banbury mixer, a twin screw extruder, or a like kneader; and dynamically crosslinked elastomers obtained by adding a crosslinking agent in physically dispersing a polyolefin-based resin that will be hard segments and a rubber component that will be soft segments using a Banbury mixer, a twin screw extruder, or a like kneader to completely or partially crosslink the rubber component in a polyolefin-based resin matrix for microdispersion.

The thermoplastic elastomer may be either a non-crosslinked thermoplastic elastomer or a crosslinked thermoplastic elastomer. The thermoplastic elastomer is preferably a non-crosslink elastomer prepared by physically dispersing a polyolefin-based resin that will be hard segments and a rubber component that will be soft segments. That improves the recyclability of the resultant foamed polyolefin-based resin sheet. The arrangement also facilitates the manufacture of the foamed polyolefin-based resin sheet using an extruder that is similar to the one used in the extrusion-foam molding of general polyolefin-based resins. The same arrangement is capable of reducing improper foaming and other molding defects attributable to crosslinked rubber even if the foamed polyolefin-based resin sheet is recycled and fabricated again in an extruder for the same foam-molding process.

Meanwhile, the dynamically crosslinked elastomer obtained by physically dispersing and simultaneously completely or partially crosslinking a rubber component that will be soft segments is preferred because of its excellent compatibility with polyolefin-based resins and improved heat-resistance of obtained foams.

Examples of the thermoplastic elastomer include olefin-based elastomers, such as ethylene/propylene/diene copolymers, ethylene/vinyl acetate copolymers, polybutenes, and chlorinated polyethylenes; styrene-based elastomers; polyester-based elastomers; polyamide-based elastomers; and polyurethane-based elastomers, as well as other various elastomers. The thermoplastic elastomer is preferably an ethylene/propylene/diene copolymer. The use of an ethylene/propylene/diene copolymer elastomer as the thermoplastic elastomer facilitates the manufacture of the foamed polyolefin-based resin sheet using an extruder that is similar to the one used in the extrusion-foam molding of general polyolefin-based resins.

Examples of the diene component constituting the ethylene/propylene/diene copolymer include ethylidene norbornene, 1,4-hexadiene, and dicyclopentadiene. Any one of these ethylene/propylene/diene copolymers may be used alone; alternatively, two or more of them may be used in any combination.

The foamed polyolefin-based resin sheet in accordance with the present invention is preferably manufactured by the manufacturing method detailed below or by a like method and has at least one surface with a skin thereon being cut up or with parts of the skin being cut out. Such secondary processing removes the high-density skin to expose cells (or their cross-sections) at the cut face, which in turn improves the flexibility, surface smoothness, adhesiveness to pressure sensitive adhesives, and thickness precision of the foamed polyolefin-based resin sheet. Specifically, either the skin on at least one surface of the foamed polyolefin-based resin sheet is cut up or parts of the skin are cut out, or in other words, the skin is subjected to secondary processing, in order to expose the cross-sections of cells at the cut face across the entire surface.

When that is the case, the foamed polyolefin-based resin sheet is more suited for use as a pressure sensitive adhesive tape base material. Specifically, a pressure sensitive adhesive tape may be produced that has a pressure sensitive adhesive layer stacked on its cut face where the cross-sections of cells in the foamed polyolefin-based resin sheet are exposed.

Furthermore, the foamed polyolefin-based resin sheet in accordance with the present invention is preferably manufactured by either cutting up the skin of the foamed polyolefin-based resin sheet (where the apparent density is higher than in the interior of the foamed polyolefin-based resin sheet) or cutting out parts of the skin on its front and back surfaces. That completely removes the skin where the apparent density is higher, hence further improving the flexibility, surface smoothness, adhesiveness to pressure sensitive adhesives, and thickness precision of the foamed polyolefin-based resin sheet. Specifically, either the skin on the front and back surfaces of the foamed polyolefin-based resin sheet is cut up or parts of the skin are cut out, or in other words, the skin is subjected to secondary processing, in order to expose the cross-sections of cells across the entire front and back surfaces. That exposes the cross-sections of cells in the foamed polyolefin-based resin sheet across the entire front and back surfaces.

In these cases, the skin (outmost material) is removed (cut up or cut out) to a depth (thickness) that is suitably determined so that no skin would be left behind. The depth (thickness) is preferably greater than or equal to 0.05 mm and more preferably greater than or equal to 0.1 mm.

Additive

The foamed polyolefin-based resin sheet may contain dye and pigment preferably in 1 part by mass to 25 parts by mass and more preferably in 2 parts by mass to 20 parts by mass as based on 100 parts by mass of the total resin component(s). That could produce a foamed polyolefin-based resin sheet with an excellent appearance. The dye and pigment may be, for example, any publicly known organic dye, organic pigment, and inorganic pigment so long as it does not negatively affect desired physical properties.

Examples of the organic dye include azo-based dyes, anthraquinone-based dyes, phthalocyanine-based dyes, indigoid-based dyes, quinone imine-based dyes, carbonium-based dyes, nitro-based dyes, and nitroso-based dyes.

Examples of the organic pigment include azo-based pigments, phthalocyanine-based pigments, indanthrene-based pigments, phosphorus-based pigments, dioxadine-based pigments, and isoindoline-based pigments.

Examples of the inorganic pigment include carbon black, iron oxides, titanium oxides, chromium oxides, and ultramarines.

The foamed polyolefin-based resin sheet may contain other additives, including a bubble nucleating agent, so long as desired physical properties are still obtainable.

The bubble nucleating agent promotes bubble nucleation in foaming to positively affect reduction and uniformity of cell size. Examples of the bubble nucleating agent include inorganic compounds, such as talc, mica, silica, diatomaceous earth, alumina, titanium oxide, zinc oxide, magnesium oxide, magnesium hydroxide, aluminum hydroxide, calcium hydroxide, potassium carbonate, calcium carbonate, magnesium carbonate, potassium sulfate, barium sulfate, sodium hydrogen carbonate, and glass beads; organic compounds, such as polytetrafluoroethylene, azodicarbonamide, and a mixture of sodium hydrogen carbonate and citric acid; and inert gases, such as nitrogen. Of these substances, talc is a preferred inorganic compound, and polytetrafluoroethylene is a preferred organic compound, because they effectively reduce cell size. An especially preferred polytetrafluoroethylene is one that upon dispersion becomes so fibrous that it increases the melt tension of the resin component(s). Any one of these bubble nucleating agents may be used alone; alternatively, two or more of them may be used together in any mixture.

Examples of the other additives include weatherability stabilizers, optical stabilizers, flame retardants, crystal nucleating agents, plasticizers, lubricants, surfactants, dispersants, ultraviolet light absorbing agents, antioxidants, fillers (e.g., inorganic fillers), reinforcing agents, and antistatic agents. Of these additives, surfactants impart slippage and antiblocking properties. Dispersants improve dispersibility of inorganic fillers and may be, for example, higher fatty acids, higher fatty acid esters, and higher fatty acid amides.

The other additives may be added in an amount that can be suitably selected within a range that does not disrupt the formation of bubbles or adversely affect the physical properties of the obtained foamed polyolefin-based resin sheet. The amount may be the amount employed in molding general thermoplastic resins.

The other additives, if mixed with a base material resin in advance, may be supplied inside an extruder or a like molding machine as part of a master batch to improve ease of handling, prevent contamination of manufacturing environment by airborne powder, or improve dispersibility in resin component(s).

The master batch may generally be prepared by kneading a high concentration of the other additives into the thermoplastic base material resin and pelletizing the mixture. The base material resin is by no means limited in any particular manner so long as it has excellent compatibility with other components (e.g., resin components) of the foamed polyolefin-based resin sheet. Preferred examples include homopolypropylenes (homopolymers of propylene), block polypropylenes (block copolymers of propylene), random polypropylenes (random copolymers of propylene), low-density polyethylenes, and high-density polyethylenes.

Method of Manufacturing Foamed Polyolefin-based Resin Sheet in Accordance with the Present Invention

The foamed polyolefin-based resin sheet in accordance with the present invention is manufactured, for example, by extrusion-foam molding using a resin component(s) and a blowing agent as raw material.

Examples of extruders that can be used in the extrusion-foam molding include single axis extruders, twin screw extruders, and tandem extruders. Among these extruders, tandem extruders are preferred for ease in adjusting extrusion conditions. The raw material for the foamed polyolefin-based resin sheet is kneaded in an extruder and extrusion-foamed through the die set that is disposed at the downstream end of the extruder to form a foamed polyolefin-based resin sheet (hereinafter, may be referred to as a "foam"). Generally, the die set may be a flat die set, such as a T die set, or a circular die set, such as a circular die set. The circular die set preferably has a bubble generating section that generates bubbles in the raw material and a foam molding section that molds the bubble-containing raw material into a foam (foamed polyolefin-based resin sheet). A preferred example of such a die set is the circular die set shown in a schematic cross-sectional view in Figure 1.

The circular die set D shown in Figure 1 has a blowing-agent-containing kneaded/molten resin channel section 3, a bubble generating section 2, a foam molding section 1, an inner circular die 4, and an outer circular die 5. The blowing-agent-containing kneaded/molten resin channel section 3 is formed between the inner circular die 4 and the outer circular die 5 so that the section 3 has the smallest cross-section at its downstream end. A blowing-agent-containing kneaded/molten resin (kneaded and melted product of the raw material containing a resin component(s) and a blowing agent) flows from the downstream end of the extruder toward the downstream end of the blowing-agent-containing kneaded/molten resin channel section 3 (from the left to the right in Figure 1). The bubble generating section 2 is formed at the downstream-end neck of the blowing-agent-containing kneaded/molten resin channel section 3 where its cross-section is the smallest. The foam molding section 1 is formed between the inner circular die 4 and the outer circular die 5 so that it is contiguous to the bubble generating section 2, to grow generated bubbles and smooth out foam surfaces. The inner circular die 4 is inserted into the outer circular die 5.

The resin pressure (pressure applied to the blowing-agent-containing kneaded/molten resin) before the die set (e.g., the circular die set D) is equal to the pressure in the channel between the downstream end of the extruder and the die set as registered on a strain gauge or a like measuring instrument. Specifically, a flange at the downstream end of the extruder, a straight tubular die having a flange on each side, and another die are sequentially coupled, after which a strain gauge is attached to the straight tubular die so that the resin pressure before the die set can be measured with the strain gauge.

The gap at the bubble generating section 2 (distance between the inner circular die 4 and the outer circular die 5 at the bubble generating section 2) is preferably from 0.1 mm to 1.0 mm. The gap at the outlet section (outlet end) of the foam molding section 1 (distance between the inner circular die 4 and the outer circular die 5 at the outlet section of the foam molding section 1) is preferably from 1 mm to 5 mm. The ratio of the gap at the bubble generating section 2 and the gap at the outlet section of the foam molding section 1, (Gap at Outlet Section of Foam Molding Section 1) / (Gap of Bubble generating section 2), is preferably from 4 to 20. The ratio of the die diameter at the bubble generating section 2 (inner diameter of the outer circular die 5 at the bubble generating section 2) and the die diameter at the outlet section of the foam molding section 1 (inner diameter of the outer circular die 5 at the outlet section of the foam molding section 1), (Die Diameter at Outlet Section of Foam Molding Section 1) / (Die Diameter at Bubble generating section 2), is preferably from 1.5 to 4.0. These gap, gap ratio, die diameter, and die diameter ratio are determined suitably according to the apparent density and thickness of the foamed polyolefin-based resin sheet to be manufactured.

Producing a foam by using the circular die set D restricts the formation of corrugations on the foam surfaces even when the cells constituting the foam are smaller than the cells constituting conventional foam. Numerous corrugations could decrease the surface smoothness of the foam. The inventors assume that the circular die set D reduces the formation of corrugations at the bubble generating section 2 because of suitable slid resistance on the foam molding section 1. Corrugations in this context refer to numerous ridges and grooves produced by the foam that corrugates as it comes out of the circular die set D because it absorbs the circumferential (linear) component of its volume expansion.

The extrusion-foaming is preferably performed under conditions that the blowing-agent-containing kneaded/molten resin come out of a bubble generating section of a die set, such as the bubble generating section 2 of the circular die set D, at a discharge rate (extrusion rate) V of 50 to 300 kg/cm$^2$•hour and that the resin pressure before the die set, such as the circular die set D, be greater than or equal to 7 MPa.

If the discharge rate V is less than 50 kg/cm$^2$•hour, it becomes difficult to achieve sufficient reduction of cell size and obtain a foam with a high foaming ratio. On the other hand, if the discharge rate V is greater than 300 kg/cm$^2$•hour, the blowing-agent-containing kneaded/molten resin produces heat, destructing bubbles, at the bubble generating section. That is likely to decrease the foaming ratio. In addition, corrugations are likely to form on the surface of the foam so that the cell diameter could be non-uniform, possibly reducing the surface smoothness of the foam. The discharge rate V may be adjusted, where necessary, through the cross-sectional area and extruded resin mass (discharge quantity) of the bubble generating section of the circular die set or a like die set.

The discharge rate V (kg/cm$^2$•hour) for the blowing-agent-containing kneaded/molten resin is given by the following formula:

$$V = \text{Extruded Resin Mass} / \text{Die Set Bubble generating section Cross-section} \bullet \text{Time}.$$

The extruded resin mass refers to the total mass of the blowing-agent-containing kneaded/molten resin extruded from the die set. Therefore, the extruded resin mass is equal to the total mass of the thermoplastic resin composition (raw material minus the blowing agent) and the blowing agent. The extruded resin mass is expressed as the discharge quantity per hour (kg/hour). The die set bubble generating section cross-section refers to the cross-sectional area of the bubble generating section of the die set. The "time" in the formula is the time taken to extrude the blowing-agent-containing kneaded/molten resin. (If the extruded resin mass is expressed as the discharge quantity per hour, the "time" is equal to 1.)

The discharge rate V is preferably from 70 to 250 kg/cm$^2$•hour and more preferably 100 to 200 kg/cm$^2$•hour. The resin pressure before the circular die set D is preferably greater than or equal to 7 MPa and less than or equal to 20 MPa. The extrusion-foaming under the foregoing conditions improves the foaming capability of resin components, reduces cell size, and increases the mechanical strength of cell films. The foam obtained under these conditions exhibits improved fabricability for secondary processing. A sheet of foam prepared, for example, by slicing that foam exhibits excellent surface smoothness. The cross-sectional area of the bubble generating section may be adjusted by one of the two following methods as examples. A method changes the length (for the case of a flat die set) or diameter (inner diameter of the outer die set) of the bubble generating section of the die set (for the case of a circular die set). The other method changes the gap (between the dies at the bubble generating section) of the bubble generating section of the die set (for the case of a flat die set or a circular die set).

If the resin pressure before the die set is less than 7 MPa, bubbles may start to be generated before the bubble generating section of the die set. The resultant foam could not be as good as it should be. On the other hand, if the resin pressure before the die set increases beyond 20 MPa, the extruder may experience an excessive load. Under the same conditions, the injection pressure may be too high to press-feed the blowing agent. The resin pressure before the die set can be adjusted, where necessary, through the molten resin viscosity, extrusion discharge quantity, and circular die set bubble generating section cross-section. The molten resin viscosity in turn can be adjusted, where necessary, through the viscosity of the blended resin composition, the mass of the blowing agent added, and the molten resin temperature.

The molten resin temperature is the temperature of the blowing-agent-containing kneaded/molten resin as measured using a thermocouple attached to a straight tubular die (for such a die, resin pressure is measured before the die set of, for example, the circular die set D) so as to be in direct contact with the blowing-agent-containing kneaded/molten resin.

The molten resin temperature is preferably 10°C to 20°C higher than the melting point of the polyolefin-based resin that constitutes part of the raw material to improve foaming capability. As the molten resin temperature approaches the melting point of the polyolefin-based resin, the polyolefin-based resin starts to crystallize. The crystallization may increase the viscosity abruptly, which could in turn result, for example, in unstable extrusion conditions and increased extruder load. If the molten resin temperature is excessively high, the resin foams faster than the foamed resin solidifies, resulting in an insufficiently low foaming ratio.

The foamed polyolefin-based resin sheet is manufactured using a blowing agent. The blowing agent is by no means limited in any particular manner and may be any one of various, publicly known blowing agents. Examples of the blowing agent include hydrocarbons, such as propane, n-butane, isobutane, n-pentane, isopentane, neopentane, cyclopentane, cyclopentadiene, n-hexane, and petroleum ether; ketones, such as acetone and methyl ethyl ketones; alcohols, such as methanol, ethanol, and isopropyl alcohol; low-boiling-point ether compounds, such as dimethyl ether, diethyl ether, dipropyl ether, and methyl ethyl ether; halogen-containing hydrocarbons, such as trichloromonofluoro methane and dichlorodifluoro methane; and inorganic gases, such as carbon dioxide, nitrogen, and ammonia. Any one of these blowing agents may be used alone; alternatively, two or more of them may be used in any mixture.

Of these blowing agents, inorganic gases are preferred, and carbon dioxide is especially preferred. By using supercritical, subcritical, or liquefied carbon dioxide, the obtained foamed polyolefin-based resin sheet contains smaller cells than conventional resin foamed sheets that are obtainable using carbon dioxide in other forms. Especially preferably, the blowing agent is supercritical carbon dioxide. The use of supercritical carbon dioxide allows the resin component to be impregnated with an increased amount of carbon dioxide. Resultant foamed polyolefin-based resin sheets contain smaller cells than foamed polyolefin-based resin sheets that are obtainable using non-supercritical carbon dioxide. A foamed polyolefin-based resin sheet containing fine cells exhibits improved surface smoothness and flexibility. Carbon dioxide turns supercritical at temperatures higher than or equal to the critical temperature of 31°C and at pressures greater than or equal to the critical pressure of 7.4 MPa.

The amount of the blowing agent press-fed into the extruder may be adjusted where necessary according to the apparent density of the foamed polyolefin-based resin sheet. However, if a relatively small amount of blowing agent is press-fed into the extruder, the apparent density of the foamed polyolefin-based resin sheet may increase, which could decrease its lightweight-ness and flexibility. On the other hand, if a relatively large amount of blowing agent is press-fed into the extruder, the blowing agent press-fed into the extruder may foam inside the die set, possibly allowing large spaces to form inside the foamed polyolefin-based resin sheet. Therefore, the amount of the blowing agent is preferably 1 part by mass to 10 parts by mass, more preferably 2 parts by mass to 8 parts by mass, and even more preferably 3 parts by mass to 6 parts by mass, per 100 parts by mass of the resin raw material for the foamed polyolefin-based resin sheet (resin component that constitutes part of the raw material).

The raw material for the foamed polyolefin-based resin sheet may contain the aforementioned bubble nucleating agent.

If the amount of the bubble nucleating agent is relatively small, it may become difficult to increase the cell count for the foamed polyolefin-based resin sheet, possibly increasing the average cell diameter of the foamed polyolefin-based resin sheet. On the other hand, if the amount of the bubble nucleating agent is relatively large, secondary aggregation may occur, possibly resulting in, for example, improper extrusion-foaming. Therefore, the amount of the bubble nucleating agent is preferably 0.01 parts by mass to 15 parts by mass and more preferably 0.1 parts by mass to 12 parts by mass, per 100 parts by mass of the resin raw material for the foamed polyolefin-based resin sheet (resin component that constitutes part of the raw material).

The bubble nucleating agent may be mixed with another component of the foamed polyolefin-based resin sheet to be supplied in the form of raw material mixture to the inside of a foam-molding machine, such as the extruder. Alternatively, the bubble nucleating agent and another component of the foamed polyolefin-based resin sheet may be separately supplied to the inside of the extruder. In addition, the bubble nucleating agent is preferably mixed with a base material resin in advance and molded together to be supplied as part of a master batch to the inside of the extruder, to improve ease of handling, prevent contamination of manufacturing environment by airborne powder, or improve dispersibility in resin component(s). The master batch may generally be prepared by kneading a high concentration of the bubble nucleating agent into the thermoplastic base material resin and pelletizing the mixture. The base material resin is similar to that which was described in relation to the master batch containing other additives.

As mentioned earlier, it is preferred to manufacture a foamed polyolefin-based resin sheet by extrusion-foam molding and thereafter cut up the skin on at least one surface of the foamed polyolefin-based resin sheet obtained by extrusion-foam molding or cut out parts of the skin (subject the skin to slicing). The arrangement removes the skin where the apparent density is higher than in the interior of the foamed polyolefin-based resin sheet from at least one surface of the foamed polyolefin-based resin sheet, so that the cross-sections of cells can be exposed across the at least one entire surface. The obtained foamed polyolefin-based resin sheet hence has excellent thickness precision and surface smoothness, more flexible, and excellent adhesiveness to pressure sensitive adhesives.

Skin may be cut up or parts of the skin be cut out on both surfaces (front and back surfaces) of the foamed polyolefin-based resin sheet. That removes the skin where the apparent density is higher than in the interior of the foamed polyolefin-based resin sheet from both surfaces of the foamed polyolefin-based resin sheet, exposing the cross-sections of cells across the two entire surfaces. The foamed polyolefin-based resin sheet that exposes the cross-sections of cells across its two entire surfaces may be suitably used as a pressure sensitive adhesive tape base material and a sealant base material.

The skin may be cut up or parts of the skin be cut out by any publicly known slicing or another like method, for example, by cutting up the skin using a cutter or a splitting machine or cutting out parts of the skin using a sandblast. The resultant foamed polyolefin-based resin sheet, made of the aforementioned resin composition, provides excellent fabricability in the cut-up and cut-out processes.

Other manufacturing conditions, such as manufacturing step temperature, manufacturing step pressure, manufacturing step duration, and manufacturing equipment, are specified in a suitable manner according to raw materials used. Either a single raw material may be used alone or a plurality of raw materials may be used in any combination, so long as desired physical properties are obtainable.

The manufacturing method in accordance with the present invention is an example of extrusion-foam molding by which the foamed polyolefin-based resin sheet in accordance with the present invention described above can be manufactured. The method also enables the foamed polyolefin-based resin sheet in accordance with the present invention to be readily manufactured. The manufacturing method in accordance with the present invention may be used to manufacture foamed polyolefin-based resin sheets that are not the foamed polyolefin-based resin sheet in accordance with the present invention.

The manufacturing method in accordance with the present invention is a method of manufacturing a foamed polyolefin-based resin sheet which includes: melt-kneading a polyolefin-based resin composition with a supercritical carbon dioxide gas as a blowing agent in an extruder to prepare a kneaded product, the polyolefin-based resin composition containing a polypropylene-based resin having a melt flow rate of 0.2 grams/10 min. to 5 grams/10 min. in 100 parts by mass and a polyethylene-based plastomer having a melt flow rate of 0.2 grams/10 min. to 15 grams/10 min. in 25 parts by mass to 400 parts by mass; and extrusion-foaming the kneaded product out of a die set attached to a downstream end of the extruder to obtain a foamed polyolefin-based resin sheet.

In other words, according to the manufacturing method in accordance with the present invention, the resin component used in the extrusion-foam molding by which the foamed polyolefin-based resin sheet in accordance with the present invention described, above can be manufactured is a polyolefin-based resin composition containing a polypropylene-based resin having a melt flow rate of 0.2 grams/10 min. to 5 grams/10 min. in 20 mass% to 80 mass% and a polyethylene-based plastomer having a melt flow rate of 0.2 grams/10 min. to 15 grams/10 min. in 20 mass% to 80 mass%, and the blowing agent used in the extrusion-foam molding is a supercritical carbon dioxide gas. Furthermore, according to the manufacturing method in accordance with the present invention, the polyolefin-based resin composition is melted and kneaded together with the supercritical carbon dioxide gas in an extruder, and the obtained kneaded product is extrusion-foamed out of a die set attached to a downstream end of the extruder to obtain a foamed polyolefin-based resin sheet. The examples and preferred attributes of the extruder and die set, the preferred conditions of the extrusion-foaming, the preferred amount of the blowing agent (carbon dioxide), the examples of the bubble nucleating agent, the preferred amount of the bubble nucleating agent, and the cut-up or cut-out process after extrusion-foaming in the first aspect of the manufacturing method in accordance with the present invention are the same as those for the extrusion-foam molding by which the foamed polyolefin-based resin sheet in accordance with the present invention described above can be manufactured.

The polypropylene-based resin used in the aforementioned manufacturing method has a melt flow rate (MFR) of 0.2 grams/10 min. to 5 grams/10 min.

If the polypropylene-based resin used in the aforementioned manufacturing method has a melt flow rate less than 0.2 grams/10 min., the extruder may experience an excessive load, possibly resulting in low productivity, or the molten polyolefin-based resin composition containing a blowing agent (carbon dioxide gas) may be unable to flow smoothly inside the die set so that the surface of the obtained foamed polyolefin-based resin sheet could become non-uniform, possibly resulting in a less attractive appearance.

If the polypropylene-based resin used in the aforementioned manufacturing method has a melt flow rate greater than 5 grams/10 min., the resin pressure before the die set (e.g., circular die set) may decrease, and the resin pressure in the internal part of the die set where bubbles should be generated (e.g., in the bubble generating section of the circular die set) (the pressure of the polyolefin-based resin composition) may also decrease. That in turn could result in bubbles being generated before the internal part of the die set where bubbles should be generated and also could result in bubbles breaking up abruptly in an internal part of the die set that is closer to the outlet than is the part where bubbles should be generated (e.g., in the foam molding section of the circular die set), which may lower foaming capability. As a result, the obtained foamed polyolefin-based resin sheet could have a less attractive appearance or no foamed polyolefin-based resin sheet be obtained.

The examples and preferred attributes of the polypropylene-based resin have been already described under the heading, "Polypropylene-based Resin." The makeup of the polypropylene-based resin is by no means limited in any particular manner so long as it has a melt flow rate in the range given above. The polypropylene-based resin used in the aforementioned manufacturing method has a melt flow rate of more preferably 0.2 grams/10 min. to 4 grams/10 min. and even more preferably 0.3 grams/10 min. to 3.5 grams/10 min.

When a single polypropylene-based resin is used alone, the melt flow rate of the polypropylene-based resin is equal to its melt flow rate as measured by a method detailed later.

When two or more polypropylene-based resins are used in the form of a mixture, the melt flow rate of the polypropylene-based resin mixture is calculated from the melt flow rates (measured by a method detailed later) of the individual polypropylene-based resins in the following manner.

Assume that n types of polypropylene-based resins (polypropylene-based resins 1 to n) be used in the form of a mixture, and let $MFR_1$ be the melt flow rate of polypropylene-based resin 1, $MFR_2$ be the melt flow rate of polypropylene-based resin 2, ... and $MFR_n$ be the melt flow rate of polypropylene-based resin n; and C1 be the rate of polypropylene-based resin 1 content of the mixture, C2 be the rate of polypropylene-based resin 2 content of the mixture, ... and Cn be the rate of polypropylene-based resin n content of the mixture. The rate of content of each polypropylene-based resin 1 to n is the mass of that polypropylene-based resin divided by the mass of the mixture (mass of all polypropylene-based resins 1 to n). The melt flow rate of a polypropylene-based resin is calculated by the formula:

$$\text{Melt Flow Rate (grams/10 min.)} = (\text{MFR1})^{C1} \times (\text{MFR2})^{C2} \times \ldots \times (\text{MFRn})^{Cn}.$$

A foamed polyolefin-based resin sheet containing a polyethylene-based plastomer is obtainable by the aforementioned manufacturing method. The method thus imparts suitable tensile strength and adhesiveness to pressure sensitive adhesives to the foamed polyolefin-based resin sheet while maintaining its flexibility.

The polyethylene-based plastomer used in the aforementioned manufacturing method has a melt flow rate of 0.2 grams/10 min. to 15 grams/10 min.

If the polyethylene-based plastomer used in the aforementioned manufacturing method has a melt flow rate less than 0.2 grams/10 min., the extruder may experience an excessive load, possibly resulting in low productivity, or the molten polyolefin-based resin composition containing a blowing agent (carbon dioxide gas) may be unable to flow smoothly inside the die set so that the surface of the obtained foamed polyolefin-based resin sheet could become non-uniform, possibly resulting in a less attractive appearance.

If the polyethylene-based plastomer used in the aforementioned manufacturing method has a melt flow rate greater than 15 grams/10 min., the resin pressure before the die set (e.g., circular die set) may decrease, and the resin pressure in the internal part of the die set where bubbles should be generated (e.g., in the bubble generating section of the circular die set) may also decrease. That in turn could result in bubbles being generated before the internal part of the die set where bubbles should be generated and also could result in bubbles breaking up abruptly in an internal part of the die set that is closer to the outlet than is the part where bubbles should be generated (e.g., in the foam molding section of the circular die set), which may lower foaming capability. As a result, the obtained foamed polyolefin-based resin sheet could have a less attractive appearance or no foamed polyolefin-based resin sheet be obtained.

The examples and preferred attributes of the polyethylene-based plastomer have been already described under the heading, "Polyethylene-based Plastomer." The polyethylene-based plastomer has a melt flow rate of more preferably 0.3 grams/10 min. to 15 grams/10 min. and even more preferably 0.5 grams/10 min. to 13 grams/10 min.

The polypropylene-based resin and the polyethylene-based plastomer used in the aforementioned manufacturing method account for 20 mass% to 80 mass% and 20 mass% to 80 mass%, respectively, of the resin component.

If the polyethylene-based plastomer accounts for less than 20 mass%, the foamed polyolefin-based resin sheet may have excessively high hardness, possibly failing to produce foamed polyolefin-based resin sheets with high flexibility or with improved adhesiveness to pressure sensitive adhesives. If the polyethylene-based plastomer accounts for more than 80 mass%, the foamed polyolefin-based resin sheet may have excessively low hardness, possibly failing to deliver foamed polyolefin-based resin sheets with good tensile strength. The polyethylene-based plastomer content of the resin component is more preferably greater than or equal to 25 mass% and less than or equal to 70 mass% and even more preferably greater than or equal to 30 mass% and less than 50 mass%.

The polyolefin-based resin composition used in the aforementioned manufacturing method may further contain a thermoplastic elastomer. By containing a thermoplastic elastomer, molding conditions upon extrusion can be relaxed without disrupting flexibility and other properties.

If the foamed polyolefin-based resin sheet in accordance with the present invention contains a polypropylene-based resin, a polyethylene-based plastomer, and a thermoplastic elastomer as resin components, the thermoplastic elastomer content is preferably from 5 mass% to 40 mass% based on the sum of the resin components. If the thermoplastic elastomer content is less than 5 mass%, the use of the thermoplastic elastomer may not be effective. On the other hand, if the thermoplastic elastomer content is more than 40 mass%, the foamed polyolefin-based resin sheet may have excessively low hardness, possibly failing to deliver desired tensile strength. Under the same conditions, the foamed polyolefin-based resin sheet may not exhibit sufficiently improved adhesiveness to pressure sensitive adhesives. The thermoplastic elastomer content is more preferably from 10 mass% to 30 mass%.

The polyolefin-based resin composition used in the aforementioned manufacturing method may contain resin components other than the polypropylene-based resin, the polyethylene-based plastomer, and the thermoplastic elastomer. The polypropylene-based resin, polyethylene-based plastomer, and thermoplastic elastomer account, in total, for preferably greater than or equal to 70 mass%, and more preferably greater than or equal to 80 mass%, of the polyolefin-based resin composition.

Examples of the other resin components include olefin homopolymers and copolymers of an olefin-based polymerizable monomer (main component) and another monomer that is copolymerizable with the olefin-based polymerizable monomer, except for polypropylene-based resins, polyethylene-based plastomers, and thermoplastic elastomers.

More concrete examples of the other resin components include polymers, such as low-density branched polyethylenes, low-density linear polyethylenes, medium-density polyethylenes, high-density polyethylenes, and ethylene/vinyl acetate copolymers. Any one of these other resin components may be used alone, or two or more of them may be used in any combination, so long as desired physical properties are not negatively affected.

Supercritical carbon dioxide is used as a blowing agent in the manufacturing method. The use of supercritical carbon dioxide allows the polyolefin-based resin composition to be impregnated with an increased amount of carbon dioxide. Resultant foamed polyolefin-based resin sheets contain smaller cells than foamed polyolefin-based resin sheets that are obtainable using non-supercritical carbon dioxide. A foamed polyolefin-based resin sheet containing fine cells exhibits improved surface smoothness and flexibility.

The examples and preferred attributes of the thermoplastic elastomer have been already described under the heading, "Thermoplastic Elastomer." The thermoplastic elastomer preferably has a melt flow rate of 0.2 grams/10 min. to 15 grams/10 min. When the thermoplastic elastomer has a melt flow rate outside this range, the same inconveniences may arise as when the polypropylene-based resin has a melt flow rate outside the 0.2 grams/10 min. to 5 grams/10 min. range.

The manufacturing method in accordance with the present invention is capable of manufacturing foamed polyolefin-based resin sheets having an apparent density of 30 kg/m³ to 100 kg/m³, an average cell diameter of 0.02 mm to 0.2 mm, and excellent fabricability. The same manufacturing method is capable of manufacturing foamed polyolefin-based resin sheets that meet these conditions and that also have a thickness of 1 mm to 5 mm. The manufacturing method is capable of manufacturing foamed polyolefin-based resin sheets that, for example, meet these conditions and that also expose the cross-sections of cells across their entire surface. In addition, the manufacturing method is capable of manufacturing foamed polyolefin-based resin sheets having a semi-closed and semi-open cell structure or an open cell structure.

Use of Foamed Polyolefin-based Resin Sheet

The foamed polyolefin-based resin sheet in accordance with the present invention or the foamed polyolefin-based resin sheet obtained by the manufacturing method in accordance with the present invention exhibits improved tensile properties and adhesiveness to pressure sensitive adhesives, with its sufficient flexibility being maintained approximately at the same level as the flexibility of conventional foamed polyolefin-based resin sheets. Therefore, the foamed polyolefin-based resin sheet may be suitably used as a pressure sensitive adhesive tape base material that constitutes a pressure sensitive adhesive tape and as a sealant base material that constitutes a sealant.

The pressure sensitive adhesive tape in accordance with the present invention contains: either the pressure sensitive adhesive tape base material or the sealant base material and; a pressure sensitive adhesive provided on at least one of surfaces of the pressure sensitive adhesive tape base material or the sealant base material. The sealant base material in accordance with the present invention may be used to prepare a sealant. The pressure sensitive adhesive tape and the sealant exhibit improved tensile properties and adhesiveness of a pressure sensitive adhesive tape base material or sealant base material to pressure sensitive adhesives, with their sufficient flexibility being maintained approximately at the same level as the flexibility of conventional pressure sensitive adhesive tapes and sealants, because they contain the foamed polyolefin-based resin sheet in accordance with the present invention. In addition, the use of the foamed polyolefin-based resin sheet in accordance with the present invention provides a high quality pressure sensitive adhesive tape and sealant that have excellent followability to the surface of an object, as well as excellent cushioning performance and sealability, and that do not easily tear upon being peeled.

These pressure sensitive adhesive tape and sealant may be suitably used with electronic devices, such as liquid crystal televisions and mobile phones.

The foamed polyolefin-based resin sheet (pressure sensitive adhesive tape base material foam or sealing base material foam) that constitutes the pressure sensitive adhesive tape preferably contains as a resin component an ethylene-based plastomer in the particular proportion mentioned above. When this is the case, the foamed polyolefin-based resin sheet exhibits improved adhesiveness to pressure sensitive adhesives over conventional foamed polyolefin-based resin sheets containing a polyolefin-based resin and a thermoplastic elastomer as resin components. Therefore, the foamed polyolefin-based resin sheet is less likely to peel off the pressure sensitive adhesive, thereby preventing parts of the pressure sensitive adhesive being left behind on the object upon peeling the pressure sensitive adhesive tape from the object. Therefore, the pressure sensitive adhesive used for the pressure sensitive adhesive tape may be selected from a wide range of choices.

The pressure sensitive adhesive tape may be manufactured by stacking a layer of pressure sensitive adhesive (pressure sensitive adhesive layer) on at least one of surfaces of the pressure sensitive adhesive tape base material or the sealant base material. More specifically, the pressure sensitive adhesive tape may be manufactured by, for example, a method of applying a pressure sensitive adhesive directly onto at least one of surfaces of the pressure sensitive adhesive tape base material or the sealant base material to form a pressure sensitive adhesive layer and stacking, for example, silicone-coated peel paper on the surface of the formed pressure sensitive adhesive layer; a method of forming a pressure sensitive adhesive layer on peel paper and attaching the side of the peel paper on which there has been formed a pressure sensitive adhesive layer onto at least one of surfaces of the pressure sensitive adhesive tape base material or the sealant base material; and a more simple and convenient method of attaching one of the adhesive faces of a commercially available double-sided pressure sensitive adhesive tape (the side on which a pressure sensitive adhesive layer is formed) onto at least one of surfaces of the pressure sensitive adhesive tape base material or the sealant base material.

The pressure sensitive adhesive tape in accordance with the present invention may be a double-sided pressure sensitive adhesive tape that has a pressure sensitive adhesive on both sides (front and back sides) of the pressure sensitive adhesive tape base material or the sealant base material. The double-sided pressure sensitive adhesive tape preferably has a pressure sensitive adhesive layer on the front and back surfaces of a foamed polyolefin-based resin sheet prepared by cutting up the skin or cutting out parts of this skin on the front and back surfaces.

If the pressure sensitive adhesive layer is very thick, the pressure sensitive adhesive may likely remain on an object upon peeling the pressure sensitive adhesive tape from the object or be adjustable in position only with difficulty. On the other hand, if the pressure sensitive adhesive layer is very thin, the pressure sensitive adhesive tape may fail to maintain sufficient adhesive force. For these reasons, the pressure sensitive adhesive layer has a thickness of preferably 5 $\mu$m to 100 $\mu$m, more preferably 8 $\mu$m to 50 $\mu$m, and even more preferably 10 $\mu$m to 40 $\mu$m.

The pressure sensitive adhesive used for the pressure sensitive adhesive tape may be any publicly known, broadly used pressure sensitive adhesive. Examples of the pressure sensitive adhesive include rubber-based pressure sensitive adhesives, acrylic-based pressure sensitive adhesives, silicone-based pressure sensitive adhesives, polyester-based pressure sensitive adhesives, urethane-based pressure sensitive adhesives, polyamide-based pressure sensitive adhesives, vinyl alkyl ether-based pressure sensitive adhesives, and fluorine-based pressure sensitive adhesives. Any one of these pressure sensitive adhesives may be used alone; alternatively, two or more of them may be used in any combination. The pressure sensitive adhesive is preferably an acrylic-based pressure sensitive adhesive that has excellent adhesiveness to the foamed polyolefin-based resin sheet in accordance with the present invention and that is easily adjustable in adhesiveness and peelability for the object and more preferably an acrylic-based pressure sensitive adhesive containing (meth)acrylic acid alkyl ester as a main component. "(Meth)acrylic" in the context of the present invention means either acrylic or methacrylic.

Examples

The following will specifically describe the present invention by way of examples and comparative examples which are by no means limiting the present invention.

Melt Flow Rates of Polypropylene-based Resin, Polyethylene-based Plastomer, and Thermoplastic Elastomer

The melt mass flow rate of the melt flow rates (hereinafter, abbreviated "MFRs" where appropriate) of a polypropylene-based resin, a polyethylene-based plastomer, and a thermoplastic elastomer was measured according to method B described in JIS K 7210 (1999), "Test Method for Melt Mass Flow Rate (MFR) and Melt Volume Flow Rate (MVR) of Plastics/Thermoplastic Plastics" using a "Semiauto Melt Indexer 2A" (trade name) manufactured by Toyo Seiki Seisaku-sho, Ltd. The MFRs of polypropylene-based resins and thermoplastic elastomers were measured under the following conditions: the samples had a mass of 3 grams to 8 grams, preheating duration was 270 seconds, load retention time was 30 seconds, test temperature was 230°C, and test load was 21.18 Newtons. The MFRs of polyethylene-based plastomers were measured under the following conditions: the samples had a mass of 3 grams to 8 grams, preheating duration was 270 seconds, load retention time was 30 seconds, test temperature was 190°C, and test load was 21.18 Newtons. Each sample was tested three times. The three measurements were averaged to obtain the value of melt mass flow rate (grams/10 min.).

Apparent Density of Foamed Polyolefin-based Resin Sheet

The apparent density of a foamed polyolefin-based resin sheet was measured by a method described in JIS K 7222 (2005), "How to Determine Apparent Density of Foamed Plastics and Rubbers." Specifically, a test piece with a 100-cm$^3$ or greater volume was cut up without changing the original cell structure of the material, the mass of each resultant test pieces was measured, and the apparent density was calculated from the following formula:

$$\text{Apparent Density (kg/m}^3) = (\text{Mass of Test Piece (grams) / Volume of Test Piece (mm}^3)) \times 10^6.$$

The test piece used in the measurement was prepared by cutting out a 35 cm $\times$ 100 cm fragment from a sample (foamed polyolefin-based resin sheet) 72 hours or more after the sample was molded and then leaving the fragment to sit under particular atmospheric conditions (at a temperature of 23$\pm$2°C and a humidity of 50$\pm$5%) for at least 16 hours for conditioning.

Thickness of Foamed Polyolefin-Based Resin Sheet

The thickness of a foamed polyolefin-based resin sheet was measured at 12 points that were positioned on a line parallel to the sheet width direction (TD direction) and spaced apart by 30-mm intervals, and the average value of the 12 measurements was calculated. A thickness measuring instrument is capable of measuring the thickness of a foamed polyolefin-based resin sheet over an area of $\phi = 10$ mm. An example of a measuring instrument used to measure the thickness of foamed polyolefin-based resin sheets is a thickness gauge (Model No. 547-301) manufactured by Mitsutoyo Corporation.

Average Cell Diameter of Foamed Polyolefin-based Resin Sheet

The average cell diameter of a foamed polyolefin-based resin sheet was measured by the following test method. A foamed polyolefin-based resin sheet was cut, starting at the midpoint of its width and proceeding in the MD direction (extrusion direction) and the TD direction (width direction which was perpendicular to the extrusion direction). The cross-section of the cut foamed polyolefin-based resin sheet was magnified by 20 times to 100 times and imaged using a scanning electron microscope ("S-3000N" manufactured by Hitachi, Ltd. or "S-3400N" manufactured by Hitachi High-Technologies Corporation), and the captured images were printed. In that process, the magnification ratio on the scanning electron microscope was adjusted so that there were approximately 10 to 20 cells on a 60-mm-long straight line drawn on the printed image. The captured images were printed in groups of four, each group on a separate A4-size sheet of printing paper. The average chord length (t) of cells was calculated from the cell count on any given straight line that was parallel to the MD direction, the cell count on any given straight line that was parallel to the TD direction, and the cell count on any given straight line in the VD direction that was perpendicular to the MD direction and to the TD direction (all the straight lines were 60 mm long) according to the following formula:

$$\text{Average Chord Length t (mm)} = 60 / (\text{Cell Count} \times \text{Magnification Ratio of Printed Image}).$$

If the test piece was too thin to count cells on a 60-mm-long straight line drawn in the VD direction, cells were counted instead on a 30-mm or 20-mm-long straight line, and the count was converted to obtain a cell count on a 60-mm-long straight line. The straight lines were drawn so as to best prevent cells from coming into contact with the straight lines only at a single (contact) point. If a cell inevitably came into contact with a straight line only at a single (contact) point, the cell was counted in as one of those cells that were located on the straight line. Six measurements were carried out for each direction.

The magnification ratio of a printed image was determined by measuring a scale bar on the printed image using a "Digimatic Caliper" manufactured by Mitsutoyo Corporation in units of 1/100 mm and plugging the measurement into the following formula:

$$\text{Magnification Ratio of Printed Image} = \text{Measured Size of Scale Bar (mm) / Reading on Scale Bar (mm).}$$

A cell diameter d was calculated for each direction according to the following formula:

$$d\ (mm) = t\ /\ 0.616.$$

Furthermore, the cell diameters were arithmetically averaged to calculate an average cell diameter. In other words, an average cell diameter was calculated according to the following formula:

$$\text{Average Cell Diameter (mm)} = (d_{MD} + d_{TD} + d_{VD})\ /\ 3,$$

where $d_{MD}$ is the cell diameter (mm) in the MD direction, $d_{TD}$ is the cell diameter (mm) in the TD direction, and $d_{VD}$ is the cell diameter (mm) in the VD direction.

Tensile Strength and Yield Point (Maximum Point) Elongation of Foamed Polyolefin-based Resin Sheet

The tensile strength and yield point (maximum point) elongation of a foamed polyolefin-based resin sheet were measured in the following manner. First, a total of 10 test pieces were punched out of a foamed polyolefin-based resin sheet using a punching blade having a shape of dumbbell No. 3 as specified in JIS K 6251 (2010), so that the longitudinal directions of five of the 10 test pieces matched the flow direction (MD direction (extrusion direction)) and the longitudinal directions of the other five matched the width direction (TD direction). The test pieces were conditioned at a temperature of $23\pm2°C$ and a humidity of $50\pm5\%$ for at least 16 hours. After that, a force and gripper-to-gripper distance were measured in the same conditioning environment on a universal testing instrument, TENSILON (model No. UCT-10T, manufactured by Orientec Co., Ltd.), and universal testing instrument data processing software (trade name: "UTPS-STD" manufactured by Soft Brain Co., Ltd.) at a test rate of 500 mm/min. with the initial gripper-to-gripper distance being set to 50 mm. The tensile strength was then calculated by a method specified by JIS K 6251 (2010). In other words, the tensile strength TS (MPa) was calculated according to the following formula:

$$TS = Fm/Wt,$$

where TS is a tensile strength (MPa), Fm is a maximum force (N), W is the width (mm) of a parallel portion of the punching blade shape, and t is the thickness (mm) of the parallel portion.
Note that the yield point (maximum point) elongation Ey (%) was calculated from the initial gripper-to-gripper distance and the gripper-to-gripper distance when the yield point y was reached according to the following formula:

$$E_y = (L_y\text{-}L_0)/L_0 \times 100,$$

where $L_y$ is the gripper-to-gripper distance (mm) when the yield point y is reached, and Lo is an initial gripper-to-gripper distance (mm). The yield point y (maximum point) was considered to be reached when the tensile stress assumed a maximum value (tensile strength).

Compressive Strength upon 50% Compression of Foamed Polyolefin-based Resin Sheet

The compressive strength upon 50% compression of a foamed polyolefin-based resin sheet was measured on a universal testing instrument, TENSILON (model No. UCT-10T, manufactured by Orientec Co., Ltd.), and universal testing instrument data processing software (trade name: "UTPS-STD" manufactured by Soft Brain Co., Ltd.). Each test piece of the foamed polyolefin-based resin sheet measured 50 mm (height) $\times$ 50 mm (width) $\times$ 2 mm (thickness), and the compression rate was set to 1 mm/min. (at this rate, the "per minute" moving speed of the compression plate was as close to 50% of the thickness of the test piece as possible). If the test piece was 2 mm thick or thicker, the test piece was used as it was in the measurement. If the test piece was thinner than 2 mm, a plurality of test pieces was stacked for measurement so that the total thickness was about 2 mm. The compressive strength was measured when the test piece was compressed to half of its initial thickness. The measurement was carried out on three test pieces. The test pieces were conditioned at a temperature of $23\pm2°C$ and a humidity of $50\pm5\%$ for at least 16 hours. After that, the measurement was carried out at a temperature of $23\pm2°C$ and a humidity of $50\pm5\%$.
The compressive strength upon 50% compression was calculated according to the following formula:

$$\sigma_m = F_m \,/\, A_0 \times 10^3,$$

where $\sigma_m$ is the compressive strength (kPa) upon 50% compression, $F_m$ is the maximum force (N) until a deformation ratio of 50% is reached, and $A_0$ is the initial cross-section ($mm^2$) of the test piece.

Tear Strength of Foamed Polyolefin-based Resin Sheet

The tear strength of a foamed polyolefin-based resin sheet was measured, by using test pieces specified in JIS K6767 (1999), on a universal testing instrument, TENSILON (model No. UCT-10T, manufactured by Orientec Co., Ltd.), and universal testing instrument data processing software (trade name: "UTPS-STD" manufactured by Soft Brain Co., Ltd.) according to JIS K6767 (1999), "Test Method for Foamed Plastics and Polyethylenes" at a test rate of 500 mm/min. and a chuck interval of 50 mm. A total of 10 test pieces were punched out of a foamed polyolefin-based resin sheet so that the longitudinal directions of five of the 10 test pieces matched the flow direction (MD direction) of the foamed polyolefin-based resin sheet and the longitudinal directions of the other five matched the width direction (TD direction). The test pieces were conditioned at a temperature of $23\pm2°C$ and a humidity of $50\pm5\%$ for at least 16 hours. After the conditioning, the test pieces were subjected to measurement at a temperature of $23\pm2°C$ and a humidity of $50\pm5\%$.

The tear strength was calculated according to the following formula:

$$\text{Tear Strength (N/cm)} = \text{Maximum Load (N)} \,/\, \text{Thickness of Test Piece (cm)}.$$

Open-cell Ratio of Foamed Polyolefin-based Resin Sheet

The open-cell ratio of a foamed polyolefin-based resin sheet was measured in accordance with ASTM D-2856-87. Specifically, the volume V of a test piece measuring 50 mm (height) $\times$ 50 mm (width) $\times$ 100 mm (thickness) was measured using an dry automatic densimeter manufactured by Shimadzu Corporation. The apparent volume V0 of the test piece was also calculated from the external shape of the test piece. The open-cell ratio was calculated by substituting volumes V and V0 into the following formula:

$$\text{Open-cell Ratio (\%)} = \text{(V0-V)} \,/\, \text{V0} \times 100.$$

Test pieces were prepared by cutting several sample sheets, each measuring 50 mm (height) by 50 mm (width), out of a foamed polyolefin-based resin sheet and stacking the cut-out sample sheets to a thickness of about 100 mm. Test pieces were stacked to a thickness of about 100 mm so as to leave as little gap as possible between the test pieces.

Example 1

A polyethylene-based plastomer (30 mass%) (trade name: "Kernel® KS240T" manufactured by Japan Polyethylene Corporation, MFR = 2.2 grams/10 min., density = 0.88 $g/cm^3$) was added to a polypropylene resin (70 mass%) (trade name: "Prime Polypro® E110G" manufactured by Prime Polymer Co., Ltd., MFR = 0.3 grams/10 min.) to prepare a blended resin composition (polyolefin-based resin composition). The blended resin composition (100 parts by mass) was mixed with 10 parts by mass of a master batch containing 70 mass% talc (average particle diameter = 13 $\mu$m) as a bubble nucleating agent and 10 parts by mass of a pigment (carbon black) to prepare a polyolefin-based resin foaming composition.

A tandem extruder was prepared that included a first extruder having a barrel diameter of 65 mm and a second extruder having a barrel diameter of 75 mm, the second extruder being connected to the downstream end of the first extruder. The circular die set D shown in Figure 1 was attached to the downstream end of the second extruder. The die diameter ($\varphi$) of the bubble generating section 2 of the circular die set D attached to the downstream end of the second extruder was set to 36 mm. The gap at the bubble generating section 2 of the circular die set D was set to 0.25 mm (the cross-section of the bubble generating section 2 was set to 0.283 $cm^2$). The gap at the outlet section of the foam molding section 1 was set to 3.4 mm. The die diameter ($\varphi$) of the outlet section of the foam molding section 1 was set to 70 mm.

The polyolefin-based resin foaming composition was supplied to the first extruder in the tandem extruder for melt-kneading. Supercritical carbon dioxide (4.2 parts by mass), as a blowing agent, was press-fed into the first extruder at a position partway along the length (extrusion direction) of the first extruder. The molten polyolefin-based resin foaming composition and the carbon dioxide were mixed and kneaded in the first extruder to obtain a uniform, molten, and blowing-agent-containing resin composition. Thereafter, the molten, blowing-agent-containing resin composition was continuously supplied from the first extruder to the second extruder where the molten, blowing-agent-containing resin composition was cooled down to a temperature suitable for foaming while being melt-kneaded.

Thereafter, the molten resin composition was extrusion-foamed from the circular die set D having the aforementioned dimensions at a discharge quantity (extrusion quantity) of 30 kg/hour (discharge rate (extrusion rate) V = 109 kg/cm$^2$•hour), a molten resin temperature of 179°C, and a resin pressure of 11 MPa before the circular die set D (pressure of the molten resin composition). A cylindrical foam (a foam of the polyolefin-based resin foaming composition) was molded in the foam molding section 1 of the circular die set D. The molded cylindrical foam was placed around a cooled mandrel, and air was sprayed from an air ring onto the exterior of the foam for cool molding. Using a cutter, the cylindrical foam was cut open at a point on the mandrel to obtain a 2-mm-thick foamed polyolefin-based resin sheet.

The foamed polyolefin-based resin sheet obtained by the method described above had no corrugations and exhibited excellent surface smoothness. Corrugations refer to numerous ridges and grooves produced by the foam that corrugates as it comes out of the circular die set because it absorbs the circumferential (linear) component of its volume expansion.

The obtained foamed polyolefin-based resin sheet was subjected to slicing (its skin was cut up or parts of the skin were cut out) on both sides on a splitting machine to remove skin on both sides of the foamed polyolefin-based resin sheet. A 0.7-mm-thick foamed polyolefin-based resin sheet having an open-cell ratio of 88% was thus obtained with the cross-sections of cells being exposed on both sides by slicing.

Example 2

A 2.1-mm-thick foamed polyolefin-based resin sheet was obtained by the same process as in Example 1, except that the amount of polypropylene resin (trade name: "Prime Polypro® E110G" manufactured by Prime Polymer Co., Ltd.) used was changed to 60 mass%, the amount of polyethylene-based plastomer (trade name: "Kernel® KS240T" manufactured by Japan Polyethylene Corporation) used was changed to 40 mass%, and the extrusion-foaming was carried out at a molten resin temperature of 178°C and a resin pressure of 8 MPa before the circular die set D. The foamed polyolefin-based resin sheet obtained by this method had no corrugations and exhibited excellent surface smoothness.

The obtained foamed polyolefin-based resin sheet was subjected to slicing on both sides on a splitting machine to remove skin on both sides of the foamed polyolefin-based resin sheet. A 1-mm-thick foamed polyolefin-based resin sheet having an open-cell ratio of 93% was thus obtained with the cross-sections of cells being exposed on both sides by slicing.

Example 3

The 2.1-mm-thick foamed polyolefin-based resin sheet obtained in Example 2 was subjected to slicing on both sides on a splitting machine to remove skin on both sides of the foamed polyolefin-based resin sheet. A 0.5-mm-thick foamed polyolefin-based resin sheet having an open-cell ratio of 93% was thus obtained with the cross-sections of cells being exposed on both sides by slicing.

Example 4

A 1.9-mm-thick foamed polyolefin-based resin sheet was obtained by the same process as in Example 2, except that a polyethylene-based plastomer (trade name: "Kernel® KS571" manufactured by Japan Polyethylene Corporation, MFR = 12 grams/10 min., density = 0.907 g/cm$^3$) was used instead of the polyethylene-based plastomer (trade name: "Kernel® KS240T" manufactured by Japan Polyethylene Corporation) and the resin pressure before the circular die set D was changed to 11 MPa. The foamed polyolefin-based resin sheet obtained by this method had no corrugations and exhibited excellent surface smoothness.

The obtained foamed polyolefin-based resin sheet was subjected to slicing on both sides on a splitting machine to remove skin on both sides of the foamed polyolefin-based resin sheet. A 1-mm-thick foamed polyolefin-based resin sheet sliced on both sides and having an open-cell ratio of 88% was thus obtained.

Example 5

A 2.0-mm-thick foamed polyolefin-based resin sheet was obtained by the same process as in Example 2, except that a polypropylene resin (trade name: "Daploy WB135 HMS" manufactured by Borealis AG, MFR = 2.4 grams/10 min.) was used instead of the polypropylene resin (trade name: "Prime Polypro® E110G" manufactured by Prime Polymer Co., Ltd.), the molten resin temperature was changed to 177°C, and the resin pressure before the circular die set D was changed to 9 MPa. The foamed polyolefin-based resin sheet obtained by this method had no corrugations and exhibited excellent surface smoothness.

The obtained foamed polyolefin-based resin sheet was subjected to slicing on both sides on a splitting machine to remove skin on both sides of the foamed polyolefin-based resin sheet. A 1-mm-thick foamed polyolefin-based resin sheet sliced on both sides and having an open-cell ratio of 89% was thus obtained.

Example 6

A 1.9-mm-thick foamed polyolefin-based resin sheet was obtained by the same process as in Example 2, except that the amount of the polyethylene-based plastomer (trade name: "Kernel® KS240T" manufactured by Japan Polyethylene Corporation) used was changed to 20 mass%, a thermoplastic elastomer (or a non-crosslink ethylene/propylene/diene copolymer elastomer, trade name: "Thermorun® Z101N" manufactured by Mitsubishi Chemical Corporation, MFR = 11 grams/10 min.) was added to the blended resin composition in 20 mass%, the molten resin temperature was changed to 177°C, and the resin pressure before the circular die set D was changed 10 MPa. The foamed polyolefin-based resin sheet obtained by this method had no corrugations and exhibited excellent surface smoothness.

The obtained foamed polyolefin-based resin sheet was subjected to slicing on both sides on a splitting machine to remove skin on both sides of the foamed polyolefin-based resin sheet. A 1-mm-thick foamed polyolefin-based resin sheet sliced on both sides and having an open-cell ratio of 88% was thus obtained.

Example 7

A 1.9-mm-thick foamed polyolefin-based resin sheet was obtained by the same process as in Example 6, except that a polyethylene-based plastomer (trade name: "Kernel KS571" manufactured by Japan Polyethylene Corporation, MFR = 12 grams/10 min., density = 0.907 g/cm$^3$) was used instead of the polyethylene-based plastomer (trade name: "Kernel® KS240T" manufactured by Japan Polyethylene Corporation), a thermoplastic elastomer (trade name: "Prime TPO® R110E" manufactured by Prime Polymer Co., Ltd., MFR = 1.5 grams/10 min.) was used instead of the thermoplastic elastomer (trade name: "Thermorun® Z101N" manufactured by Mitsubishi Chemical Corporation, MFR = 11 grams/10 min.), the molten resin temperature was changed to 178°C, and the resin pressure before the circular die set D was changed to 12 MPa. The foamed polyolefin-based resin sheet obtained by this method had no corrugations and exhibited excellent surface smoothness.

The obtained foamed polyolefin-based resin sheet was subjected to slicing on both sides on a splitting machine to remove skin on both sides of the foamed polyolefin-based resin sheet. A 1-mm-thick foamed polyolefin-based resin sheet sliced on both sides and having an open-cell ratio of 88% was thus obtained.

Comparative Example 1

A 2.1-mm-thick foamed polyolefin-based resin sheet was obtained by the same process as in Example 2, except that a polypropylene resin (trade name: "Newstren® SH9000" manufactured by Japan Polypropylene Corporation, MFR = 0.3 grams/10 min.) was used instead of the polypropylene resin (trade name: "Prime Polypro® E110G" manufactured by Prime Polymer Co., Ltd.), a thermoplastic elastomer (or a non-crosslinked ethylene/propylene/diene copolymer elastomer, trade name: "Thermorun® Z101N" manufactured by Mitsubishi Chemical Corporation, MFR = 11 grams/10 min.) was used instead of the polyethylene-based plastomer, the molten resin temperature was changed to 176°C, and the resin pressure before the circular die set D was changed to 9.8 MPa.

The foamed polyolefin-based resin sheet obtained by this method was subjected to slicing on both sides on a splitting machine to remove skin on both sides of the foamed polyolefin-based resin sheet. A 1-mm-thick foamed polyolefin-based resin sheet having an open-cell ratio of 90% was thus obtained with the cross-sections of cells being exposed on both sides by slicing.

Comparative Example 2

A 2.5-mm-thick foamed polyolefin-based resin sheet was obtained by the same process as in Example 2, except that a thermoplastic elastomer (or a non-crosslinked ethylene/propylene/diene copolymer elastomer, trade name: "Thermorun® Z101N" manufactured by Mitsubishi Chemical Corporation, MFR = 11 grams/10 min.) was used instead of the polyethylene-based plastomer, the molten resin temperature was changed to 179°C, and the resin pressure before the circular die set D was changed to 8.6 MPa.

The foamed polyolefin-based resin sheet obtained by this method was subjected to slicing on both sides on a splitting machine to remove skin on both sides of the foamed polyolefin-based resin sheet. A 1-mm-thick foamed polyolefin-based resin sheet having an open-cell ratio of 85% was thus obtained with the cross-sections of cells being exposed on both sides by slicing.

Comparative Example 3

Extrusion-foaming was carried out by the same process as in Example 2, except that a polypropylene resin (trade name: "Newfoamer FTS3000" manufactured by Japan Polypropylene Corporation, MFR = 10 grams/10 min.) was used instead of the polypropylene resin (trade name: "Prime Polypro® E110G" manufactured by Prime Polymer Co., Ltd.), the molten resin temperature was changed to 176°C, and the resin pressure before the circular die set D was changed to 13 MPa. The extrusion-foaming did not produce a resin sheet.

Comparative Example 4

Extrusion-foaming was carried out by the same process as in Comparative Example 2, except that a polypropylene resin (trade name: "Newfoamer FTS3000" manufactured by Japan Polypropylene Corporation, MFR = 10 grams/10 min.) was used instead of the polypropylene resin (trade name: "Prime Polypro® E110G" manufactured by Prime Polymer Co., Ltd.), the molten resin temperature was changed to 177°C, and the resin pressure before the circular die set D was changed to 12 MPa. The extrusion-foaming did not produce a resin sheet.

Comparative Example 5

Extrusion-foaming was carried out by the same process as in Example 2, except that a polyethylene-based plastomer (trade name: "VERSIFY® 4301" manufactured by The Dow Chemical Company, MFR = 25 grams/10 min., density = 0.868 g/cm$^3$) was used instead of the polyethylene-based plastomer (trade name: "Kernel® KS240T" manufactured by Japan Polyethylene Corporation), the molten resin temperature was changed to 177°C, and the resin pressure before the circular die set D was changed to 9 MPa. The extrusion-foaming did not produce a resin sheet.

Evaluation (Peel Test) of Adhesiveness (Adhesive Force) to Pressure sensitive adhesives of Foamed Polyolefin-based Resin Sheet

Peel tests were conducted on foamed polyolefin-based resin sheets and pressure sensitive adhesives to prepare the present specification in the following manner. Commercially available double-sided pressure sensitive adhesive tape (double-sided pressure sensitive adhesive tape containing an acrylic-based pressure sensitive adhesive, trade name: "9415PC" manufactured by Sumitomo 3M Ltd.) was cut up into 150 mm (length) by 20 mm (width) pieces and attached onto a side of each foamed polyolefin-based resin sheet obtained in Examples 1 to 7 and Comparative Examples 1 and 2 by moving a rubber roller (mass = 2 kg) back and forth once. The foamed polyolefin-based resin sheet to which a piece of double-sided pressure sensitive adhesive tape was attached was let to sit at a temperature of 23°C and a humidity of 50% for 30 min. After that, peel strength between the foamed polyolefin-based resin sheet and the pressure sensitive adhesive was measured in a 180° peel test on a universal testing instrument, TENSILON (model No. UCT-10T manufactured by Orientec Co., Ltd.) at a test rate of 300 mm/min. and a peeling distance of 120 mm. In other words, the 180° peeling adhesive force (N/20 mm) of the foamed polyolefin-based resin sheet for the double-sided pressure sensitive adhesive tape was taken as the peel strength from which the adhesiveness of the foamed polyolefin-based resin sheet to the pressure sensitive adhesive was evaluated.

Evaluation of Pressure sensitive adhesive Residue on Polycarbonate Plate after Peeling Foamed Polyolefin-based Resin Sheet

Commercially available double-sided pressure sensitive adhesive tape (double-sided pressure sensitive adhesive tape containing an acrylic-based pressure sensitive adhesive, trade name: "9415PC" manufactured by Sumitomo 3M Ltd.) was attached onto a side of each foamed polyolefin-based resin sheet obtained in Examples 1 to 7 and Comparative Examples 1 and 2 to prepare a pressure sensitive adhesive tape (adhesive sheet) for the present specification. The obtained adhesive sheet was cut up into 150 mm (length) by 20 mm (width) pieces and attached onto a polycarbonate plate by moving a rubber roller (mass = 2 kg) back and forth once. The polycarbonate plate to which a piece of the obtained adhesive sheet was attached was let to sit at a temperature of 23°C and a humidity of 50% for 30 min. After that, a 180° peel test was carried out on the adhesive sheet and the polycarbonate plate using a universal testing instrument, TENSILON (model No. UCT-10T manufactured by Orientec Co., Ltd.) at a test rate of 300 mm/min.

and a peeling distance of 120 mm. Thereafter, the polycarbonate plate was visually inspected for residual pressure sensitive adhesive (pressure sensitive adhesive residue). A polycarbonate plate with no pressure sensitive adhesive residue was rated "Good." As for polycarbonate plates on which a pressure sensitive adhesive residue was found, those with less than 5% of the area of the adhesive sheet (150 mm (length) by 20 mm (width)) being covered with pressure sensitive adhesive residues were rated "Fair," and those with 5% or more of the area being covered with pressure sensitive adhesive residues were rated "Poor."

Table 1 below shows evaluations of the foamed polyolefin-based resin sheets obtained in Examples 1 to 7 and Comparative Examples 1 and 5.

[Table 1]

| | | Examples | | | | | | | Comparative Examples | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Polyolefin-based Resin (mass%) | Prime Polypro® E110G (MFR = 0.3 g/10 min.) | 70 | 60 | 60 | 60 | - | 60 | 60 | - | 60 | - | - | 60 |
| | Daploy WB135 HMS (MFR = 2.4 g/10 min.) | - | - | - | - | 60 | - | - | - | - | - | - | - |
| | Newstren® SH9000 (MFR = 0.3 g/10 min.) | - | - | - | - | - | - | - | 60 | - | - | - | - |
| | Newfoamer® FTS3000 (MFR = 10 g/10 min.) | - | - | - | - | - | - | - | - | - | 60 | 60 | - |
| Polyethylene-based Plastomer (mass%) | Kernel® KS240T (MFR = 2.2 g/10 min.) | 30 | 40 | 40 | - | 40 | 20 | - | - | - | 40 | - | - |
| | Kernel® KS571 (MFR = 12 g/10 min.) | - | - | - | 40 | - | - | 20 | - | - | - | - | - |
| | VERSIFY® 4301 (MFR = 25 g/10 min.) | - | - | - | - | - | - | - | - | - | - | - | 40 |
| Thermoplastic Elastomer (mass%) | Thermorun® Z101N (MFR = 11 g/10 min.) | - | - | - | - | - | 20 | - | 40 | 40 | - | 40 | - |
| | Prime TPO® R110E (MFR = 1.5 g/10 min.) | - | - | - | - | - | - | 20 | - | - | - | - | - |

(continued)

| Evaluations | | Examples | | | | | | | Comparative Examples | | | | |
|---|---|---|---|---|---|---|---|---|---|---|---|---|---|
| | | 1 | 2 | 3 | 4 | 5 | 6 | 7 | 1 | 2 | 3 | 4 | 5 |
| | Apparent Density (kg/m$^3$) | 48 | 47 | 47 | 50 | 50 | 48 | 50 | 50 | 43 | No resin sheet was produced. | | |
| | Average Cell Diameter (mm) | 0.13 | 0.13 | 0.13 | 0.12 | 0.12 | 0.13 | 0.12 | 0.11 | 0.11 | | | |
| | Thickness (mm) | 0.7 | 1.0 | 0.5 | 1.0 | 1.0 | 1.0 | 1.0 | 1.0 | 1.0 | | | |
| | Compressive Strength upon 50% Compression (kPa) | 52 | 62 | 69 | 73 | 79 | 58 | 70 | 54 | 55 | | | |
| | Tensile Strength (kPa) | 1400 | 1071 | 1512 | 1215 | 1320 | 900 | 925 | 749 | 629 | | | |
| | Yield Point (Maximum Point) Elongation (%) | 136 | 146 | 153 | 143 | 141 | 125 | 120 | 83 | 58 | | | |
| | Tear Strength (N/cm) | 94 | 66 | 69 | 73 | 85 | 50 | 57 | 36 | 27 | | | |
| | Peel Strength (N/20 mm) | 5.4 | 5.0 | 5.0 | 5.0 | 5.2 | 4.5 | 4.3 | 3.0 | 2.8 | | | |
| | Residual Adhesive Agent on Polycarbonate Plate | Good | Good | Good | Good | Good | Good | Good | Fair | Fair | | | |

The evaluations show that the foamed polyolefin-based resin sheets obtained in Examples 1 to 7 have better tensile strength and tear strength than those obtained in Comparative Examples 1 and 2. They also show that the foamed polyolefin-based resin sheet obtained in Examples 1 to 7 exhibit better yield-point elongations in tensile tests than those obtained in Comparative Examples 1 and 2. They further show that the foamed polyolefin-based resin sheets obtained in Examples 1 to 7 have better adhesiveness to pressure sensitive adhesives (peel strength) than those obtained in Comparative Examples 1 and 2. They also show that the foamed polyolefin-based resin sheets obtained in Examples 1 to 7 have sufficient flexibility (a sufficiently low compressive strength upon 50% compression) that is approximately at the same level as the flexibility of those obtained in Comparative Examples 1 and 5.

Specifically, no sheet was produced by the method of Comparative Examples 3 and 4 which used a polypropylene-based resin having a melt flow rate higher than 5 grams/10 min. and by the method of Comparative Example 5 which used a polyethylene-based plastomer having a melt flow rate higher than 15 grams/10 min. No foamed polyolefin-based resin sheet was obtainable by those methods. In contrast, sheets were produced by the foamed polyolefin-based resin sheet manufacturing methods of Examples 1 to 7 in accordance with the present invention similarly to conventional foamed polyolefin-based resin sheet manufacturing methods. Foamed polyolefin-based resin sheets were obtainable by those methods in accordance with the present invention.

The foamed polyolefin-based resin sheets obtained in Examples 1 to 7 exhibit improved sheet elongations over the poor sheet elongations of conventional foamed polyolefin-based resin sheets made of a resin component containing a polyolefin-based resin and a thermoplastic elastomer, with their sufficient flexibility being maintained approximately at the same level as the flexibility of the foamed polyolefin-based resin sheets obtained in Comparative Examples 1 and 2. The foamed polyolefin-based resin sheets obtained in Examples 1 to 7 also exhibit improved tensile strength and tear strength, with their high open-cell ratios being maintained, whereas conventional foamed sheets with a high open-cell ratio exhibit low tensile strength and tear strength and allow only for limited handling in manufacture.

It is thus concluded that the foamed polyolefin-based resin sheet in accordance with the present invention is suitable for use as base material for pressure sensitive adhesive tapes and sealants.

Reference Signs List

1   Foam Molding Section
2   Bubble generating section
3   Blowing-agent-containing Kneaded/molten Resin Channel Section
4   Inner Circular Die
5   Outer Circular Die
D   Circular Die Set

**Claims**

1.   A foamed polyolefin-based resin sheet which has an apparent density of 30 kg/m$^3$ to 100 kg/m$^3$, a thickness of 0.1 mm to 3.0 mm, an average cell diameter of 0.02 mm to 0.2 mm, a compressive strength of 20 kPa to 100 kPa upon 50% compression, and a tensile strength of 800 kPa to 2,000 kPa.

2.   The foamed polyolefin-based resin sheet as set forth in claim 1, having a tear strength of 20 N/cm to 120 N/cm.

3.   The foamed polyolefin-based resin sheet as set forth in claim 1 or 2, having a yield-point elongation of 90% to 200%.

4.   The foamed polyolefin-based resin sheet as set forth in any one of claims 1 to 3, comprising a polyolefin-based resin in 20 mass% to 80 mass% and a polyethylene-based plastomer in 20 mass% to 80 mass% as resin components.

5.   The foamed polyolefin-based resin sheet as set forth in claim 4, further comprising a thermoplastic elastomer as a resin component.

6.   The foamed polyolefin-based resin sheet as set forth in claim 4 or 5, wherein the polyethylene-based plastomer has a density of 0.85 g/cm$^3$ to 0.91 g/cm$^3$.

7.   The foamed polyolefin-based resin sheet as set forth in any one of claims 4 to 6, wherein the polyethylene-based plastomer is a copolymer of ethylene and an alpha-olefin.

8. The foamed polyolefin-based resin sheet as set forth in claim 7, wherein the alpha-olefin is at least one compound selected from the group consisting of 1-butene, 1-hexene, and 1-octene.

9. The foamed polyolefin-based resin sheet as set forth in any one of claims 1 to 8, having at least one surface with a skin thereon being cut up or with parts of the skin being cut out.

10. A pressure sensitive adhesive tape base material which contains the foamed polyolefin-based resin sheet as set forth in any one of claims 1 to 9.

11. A sealant base material which contains the foamed polyolefin-based resin sheet as set forth in any one of claims 1 to 9.

12. A pressure sensitive adhesive tape which comprises:

    either the pressure sensitive adhesive tape base material as set forth in claim 10 or the sealant base material as set forth in claim 11; and
    an pressure sensitive adhesive provided on at least one of surfaces of the pressure sensitive adhesive tape base material or the sealant base material.

13. The pressure sensitive adhesive tape as set forth in claim 12, being used for electronics.

14. A method of manufacturing a foamed polyolefin-based resin sheet which comprises:

    melt-kneading a polyolefin-based resin composition with a supercritical carbon dioxide gas as a blowing agent in an extruder to prepare a kneaded product, the polyolefin-based resin composition containing a polypropylene-based resin having a melt flow rate of 0.2 grams/10 min. to 5 grams/10 min. in 20 mass% to 80 mass% and a polyethylene-based plastomer having a melt flow rate of 0.2 grams/10 min. to 15 grams/10 min. in 20 mass% to 80 mass%; and
    extrusion-foaming the kneaded product out of a die set attached to a downstream end of the extruder to obtain a foamed polyolefin-based resin sheet.

15. The method as set forth in claim 14, wherein the polyolefin-based resin composition further contains a thermoplastic elastomer.

16. The method as set forth in claim 14 or 15, wherein the die set is a circular die set having a bubble generating section and a foam molding section.

17. The method as set forth in any one of claims 14 to 16, wherein the foamed polyolefin-based resin sheet has an apparent density of 30 kg/m$^3$ to 100 kg/m$^3$ and an average cell diameter of 0.02 mm to 0.2 mm.

18. The method as set forth in any one of claims 14 to 17, wherein the foamed polyolefin-based resin sheet has either a semi-closed and semi-open cell structure or an open cell structure.

19. The method as set forth in any one of claims 14 to 18, wherein the foamed polyolefin-based resin sheet is a foam for a pressure sensitive adhesive tape base material.

FIG.1

**INTERNATIONAL SEARCH REPORT**

| International application No. |
| --- |
| PCT/JP2012/083795 |

A. CLASSIFICATION OF SUBJECT MATTER
*C08J9/12*(2006.01)i, *B29C47/20*(2006.01)i, *C08L23/08*(2006.01)i, *C08L23/10*
(2006.01)i, *C09J7/02*(2006.01)i

According to International Patent Classification (IPC) or to both national classification and IPC

B. FIELDS SEARCHED

Minimum documentation searched (classification system followed by classification symbols)
C08J9/00-9/42, B29C47/00-47/96, C08L1/00-101/14, C09J7/00-7/04

Documentation searched other than minimum documentation to the extent that such documents are included in the fields searched
Jitsuyo Shinan Koho          1922-1996     Jitsuyo Shinan Toroku Koho    1996-2013
Kokai Jitsuyo Shinan Koho    1971-2013     Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2011-74127 A  (Sekisui Plastics Co., Ltd.), 14 April 2011 (14.04.2011), claims; paragraphs [0007], [0009], [0013], [0016], [0022] to [0025], [0030], [0033], [0035]; examples (Family: none) | 1-19 |
| Y | JP 2006-257307 A  (Sekisui Plastics Co., Ltd.), 28 September 2006 (28.09.2006), claims 1 to 6; paragraphs [0014], [0016], [0021], [0025], [0026]; examples (Family: none) | 1-19 |

| ☒ | Further documents are listed in the continuation of Box C. | ☐ | See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 04 March, 2013 (04.03.13) | 12 March, 2013 (12.03.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/083795

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-11838 A (Sekisui Plastics Co., Ltd.), 15 January 2002 (15.01.2002), claims; paragraphs [0026] to [0028], [0031], [0033], [0034], [0036] (Family: none) | 1-19 |
| P,X | WO 2012/133288 A1 (Sekisui Plastics Co., Ltd.), 04 October 2012 (04.10.2012), claims (Family: none) | 1-3 |
| A | JP 2005-220303 A (Tosoh Corp.), 18 August 2005 (18.08.2005), entire text (Family: none) | 1-19 |
| A | WO 2009/57826 A1 (Sumitomo Chemical Co., Ltd.), 07 May 2009 (07.05.2009), entire text & JP 2009-108230 A    & US 2011/0039965 A1 & CN 101842435 A | 1-19 |
| A | JP 2006-169405 A (Sekisui Chemical Co., Ltd.), 29 June 2006 (29.06.2006), entire text (Family: none) | 1-19 |
| A | JP 2004-90531 A (Sekisui Chemical Co., Ltd.), 25 March 2004 (25.03.2004), entire text (Family: none) | 1-19 |
| A | JP 2011-132420 A (Sekisui Plastics Co., Ltd.), 07 July 2011 (07.07.2011), entire text (Family: none) | 1-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011231171 A

**Non-patent literature cited in the description**

- Test Method for Melt Mass Flow Rate (MFR) and Melt Volume Flow Rate (MVR) of Plastics/Thermoplastic Plastics. *JIS K 7210,* 1999
- How to Determine Apparent Density of Foamed Plastics and Rubbers. *JIS K 7222,* 2005
- Test Method for Foamed Plastics and Polyethylenes. *JIS K6767,* 1999